# EUROPEAN PATENT APPLICATION

(11) **EP 4 604 361 A1**
(43) Date of publication of application: **20.08.2025**
(21) Application number: 22966540.1
(22) Date of filing: 21.11.2022
(51) Int. Cl.: H02K 1/276, H02K 1/28, H02K 21/14, H02K 15/03

(54) **ROTOR OF MOTOR AND MANUFACTURING METHOD THEREFOR**

(71) Applicant: LG Magna e-Powertrain Co., Ltd., Seo-gu, Incheon 22744 (KR)
(72) Inventor: YOON, Jongchan, Seo-gu, Incheon 22744 (KR); KANG, Yongsoo, Seo-gu, Incheon 22744 (KR)
(74) Representative: Vossius & Partner Patentanwälte Rechtsanwälte mbB
(86) International application number: PCT/KR2022/018385
(87) International publication number: WO 2024/111679

(57) **Abstract**

The present invention relates to a rotor of a motor and a manufacturing method therefor. The rotor of a motor of the present invention includes: a rotor core including a first stage core to an n-th stage core each coupled to a rotation shaft; and permanent magnets coupled to the first stage core to the n-th stage core, respectively, wherein a plurality of magnetic steel plates of the first stage core to the n-th stage core each include a guide slot into which a guide pin is inserted to guide a permanent magnet provided in each of the first stage core to the n-th stage core to form a preconfigured skew angle, the guide slot is provided inside the plurality of magnetic poles along a radial direction, the guide slot includes a first guide slot, a second guide slot, and a third guide slot spaced apart from each other along a circumferential direction, and the first guide slot, the second guide slot, and the third guide slot are each configured to be arranged at a position forming a preconfigured angle with respect to the center of an outer magnetic pole in a radial direction. As such, the permanent magnets may be arranged to form the skew angle and the magnetic steel plates of the plurality of rotor cores divided in an axial direction may have a unified shape.

## Description

### Technical field

The disclosure relates to a rotor of a motor and a method for manufacturing the same.

### Background Art

As is well known, a motor is an apparatus that converts electric energy into mechanical energy.

The motor generally includes a stator, and a rotor arranged to be movable relative to the stator.

The rotor includes a rotation shaft, a rotor core coupled to the rotation shaft, and a magnetic force generator for generating magnetic force.

A part of the rotor is configured as a permanent magnet rotor which includes permanent magnets as the magnetic force generator.

The permanent magnets are coupled to an outer circumferential surface of the rotor core or are axially inserted into the rotor core.

In some embodiments, when the permanent magnet rotor rotates relative to the stator, cogging torque is generated due to a difference in magnetic resistances between the permanent magnet and teeth and slots of the stator core.

This cogging torque is generated periodically depending on the number of magnetic poles of the rotor and the number of teeth (slots) of the stator core.

However, in the rotor of the motor equipped with such permanent magnets in the related art, there is a problem that vibration and noise are caused due to the cogging torque.

Considering the problem, a skew structure of a rotor core in some motors is proposed in which a rotor core and a permanent magnet are axially divided and the axially divided rotor core and permanent magnet are rotatably coupled at a preset skew (angle) along a circumferential direction.

However, in the skew structure of the rotor core in the related art, an assembly rail protrudes from a shaft and a plurality of rotor cores, which are axially divided, include assembly grooves formed at different positions to be coupled to the assembly rail. As a result, a plurality of molds which have different shapes are needed to manufacture the plurality of rotor cores, thereby requiring relatively many mechanisms (molds) and increased costs to manufacture the plurality of rotor cores.

In the related art motor having permanent magnets, to form a skew in a rotor core to suppress an occurrence of vibration and noise due to cogging torque, a skewed rotor for a permanent magnet motor, in which a position of a rivet hole is eccentric from a right position by a certain angle, and a manufacturing method thereof are designed.

However, in the related art skewed rotor for the permanent magnet motor and the manufacturing method thereof, a different mold is needed to form a rivet hole at each relatively rotated position along a circumferential direction, which makes it difficult to manufacture the rotor core.

In the skewed rotor for the permanent magnet motor and the manufacturing method thereof, a plurality of rotor cores manufactured with a single mold are coupled by turning them over so that permanent magnets are arranged spaced apart in a zigzag shape along the circumferential direction. However, there is a limit to reducing cogging torque due to a difficulty in finely adjusting the skew (angle) in one direction or another direction along the circumferential direction.

### [Prior Art Documents]

### [Patent Documents]

Korean Patent Registration No. 10-2213074 (February 08, 2021)
Korean Patent Registration No. 10-1018712 (March 04, 2011)

### Disclosure of Invention

### Technical Problem

Accordingly, an aspect of the disclosure is to provide a rotor of a motor capable of unifying shapes of magnetic steel plates of a plurality of rotor cores, which are divided axially, and a method for manufacturing the same.

Another aspect of the disclosure is to provide a rotor of a motor capable of implementing a skew structure of a rotor core having a different number of stages in an axial direction using single-shaped magnetic steel plates, and a method for manufacturing the same.

Another aspect of the disclosure is to provide a rotor of a motor having a structure in which permanent magnets of rotor cores, which are axially divided and each have a plurality of stages, are continuously arranged spaced apart in one direction and/or another direction along a circumferential direction, and a method for manufacturing the same.

### Solution to Problem

According to one or more embodiments to achieve those aspects, a rotor of a motor is characterized in that a rotor core divided into a plurality of stages in an axial direction and permanent magnets are coupled in a state of being continuously rotated by a preset angle in one direction or another direction along a circumferential direction, and each magnetic steel plate of the multi-stage rotor core has the same shape.

In some embodiments, a rotor of a motor may include a rotor core having a plurality of stage cores divided into a plurality of pieces along an axial direction of a rotation shaft, and permanent magnets arranged in the rotor core, the plurality of magnetic steel plates may each include a rotation shaft hole to which the rotation shaft is coupled, permanent magnet coupling parts to which the permanent magnets are coupled, and a plurality of guide slots into which guide pins are inserted to guide the permanent magnet arranged in each of the first stage core to the n-th stage core to form a preset skew angle, the plurality of guide slots may be arranged on an inner side of the plurality of magnetic poles, the plurality of guide slots may be arranged at positions each forming a preset angle with centers of the plurality of magnetic poles on a radial outside thereof, such that the permanent magnets may be arranged at a preset skew angle, and the plurality of stage cores may each include magnetic steel plates having the same shape.

A rotor of a motor according to an embodiment includes: a rotation shaft; a rotor core including a first stage core to an n-th stage core each having a plurality of magnetic steel plates stacked, and coupled to the rotation shaft in an axial direction; and permanent magnets coupled to the first stage core to the n-th stage core, respectively, to form a plurality of magnetic poles, wherein the plurality of magnetic steel plates each include a rotation shaft hole to which the rotation shaft is coupled, permanent magnet coupling parts to which the permanent magnets are coupled, and guide slots into which a guide pin is inserted to guide the permanent magnets arranged in each of the first stage core to the n-th stage core to form a preset skew angle, the guide slots are arranged on a radial inside of the plurality of magnetic poles, each of the guide slots includes a first guide slot, a second guide slot, and a third guide slot spaced apart along a circumferential direction, and the first guide slot, the second guide slot, and the third guide slot are arranged at positions forming a preset angle with respect to a center of a magnetic pole on a radially outer side.

Accordingly, the axially divided permanent magnets may be arranged to form a preset skew angle, thereby enabling fine adjustment of cogging torque in one or another direction along the circumferential direction.

This may result in suppressing a generation of vibration and noise due to the cogging torque.

Also, the generation of vibration and noise can be reduced during rotation of the rotor, thereby enabling a quiet operation of the motor.

While implementing a skew structure of the permanent magnets, the magnetic steel plates of the multi-stage rotor core can be unified into the same shape.

This may facilitate the manufacturing of the rotor.

In an embodiment, the guide slot may include a first group including the first guide slot, the second guide slot, and the third guide slot, and a second group formed rotationally symmetrical to the first group with respect to a center of the rotor core.

Accordingly, two guide pins can be arranged at positions that are rotationally symmetrical to each other, thereby facilitating assembly (coupling) of the plurality of stage cores.

In an embodiment, each of the first guide slot, the second guide slot, and the third guide slot may include a first guide hole and a second guide hole.

According to this configuration, when the n-th stage core is an even-number stage core (e.g., second, fourth, sixth, and eighth stage cores), the shape of the magnetic steel plates of each stage core can be unified.

In an embodiment, when the n-th stage core is configured as a second stage core, the guide pin may be inserted into each of the first guide hole of the second guide slot of the first stage core and the second guide hole of the second guide slot of the second stage core.

In this way, a skew structure of the rotor core divided into two stages along the axial direction can be implemented.

In an embodiment, when the n-th stage core is configured as a fourth stage core, the guide pin may be coupled to each of the second guide hole of the third guide slot of the first stage core, the first guide hole of the second guide slot of the second stage core, the second guide hole of the second guide slot of the third stage core, and the first guide hole of the first guide slot of the fourth stage core.

This can facilitate implementation of a skew structure of a rotor core divided into four stages along the axial direction.

In an embodiment, when the n-th stage core is configured as a sixth stage core, the guide pin may be coupled to each of the first guide hole of the third guide slot of the first stage core, the second guide hole of the third guide slot of the second stage core, the first guide hole of the second guide slot of the third stage core, the second guide hole of the second guide slot of the fourth stage core, the first guide hole of the first guide slot of the fifth stage core, and the second guide hole of the first guide slot of the sixth stage core.

This can facilitate implementation of a skew structure of a rotor core divided into six stages along the axial direction.

In an embodiment, each of the first guide slot, the second guide slot, and the third guide slot may include a first guide hole, a second guide hole, and a third guide hole.

Accordingly, the rotor core can be configured to include permanent magnets of a skew structure and second to ninth stage cores in which the magnetic steel plates have the same shape.

In an embodiment, when the n-th stage core is configured as a third stage core, the guide pin may be inserted into each of the first guide hole of the second guide slot of the first stage core, the second guide hole of the second guide slot of the second stage core, and the third guide hole of the second guide slot of the third stage core.

In this way, a skew structure of the rotor core divided into three stages along the axial direction can be implemented.

In an embodiment, when the n-th stage core is configured as a fifth stage core, the guide pin may be inserted into each of the third guide hole of the third guide slot of the first stage core, the first guide hole of the second guide slot of the second stage core, the second guide hole of the second guide slot of the third stage core, the third guide hole of the second guide slot of the fourth stage core, and the first guide hole of the first guide slot of the fifth stage core.

This can facilitate implementation of a skew structure of a rotor core divided into five stages along the axial direction.

In an embodiment, when the n-th stage core is configured as a seventh stage core, the guide pin may be inserted into each of the second guide hole of the third guide slot of the first stage core, the third guide hole of the third guide slot of the second stage core, the first guide hole of the second guide slot of the third stage core, the second guide hole of the second guide slot of the fourth stage core, the third guide hole of the second guide slot of the fifth stage core, the first guide hole of the first guide slot of the sixth stage core, and the second guide hole of the first guide slot of the seventh stage core.

In this way, a skew structure of the rotor core divided into seven stages along the axial direction can be implemented.

In an embodiment, when the n-th stage core is configured as a ninth stage core, the guide pin may be inserted into each of the first guide hole of the third guide slot of the first stage core, the second guide hole of the third guide slot of the second stage core, the third guide hole of the third guide slot of the third stage core, the first guide hole of the second guide slot of the fourth stage core, the second guide hole of the second guide slot of the fifth stage core, the third guide hole of the second guide slot of the sixth stage core, the first guide hole of the first guide slot of the seventh stage core, the second guide hole of the first guide slot of the eighth stage core, and the third guide hole of the first guide slot of the ninth stage core.

This can facilitate implementation of a skew structure of a rotor core divided into nine stages along the axial direction.

In an embodiment, an internal angle A between the guide holes may be obtained by dividing a skew angle TA by a number (TN-1), obtained by subtracting in from a number (TN) of the n-th stage core.

Accordingly, a plurality of permanent magnets spaced apart along the axial direction can be arranged by being rotated at a fine angle along the circumferential direction, thereby effectively suppressing the generation of cogging torque due to the permanent magnets.

In an embodiment, the first guide slot and the third guide slot may be formed symmetrically with respect to a center line passing through a center of the second guide slot along the radial direction.

In an embodiment, the permanent magnets of the first stage core to the n-th stage core may be arranged such that permanent magnets of stage cores farther away from a horizontal line, passing through axial centers of the first stage core to the n-th stage core, are spaced apart to form a preset skew angle in a same circumferential direction.

According to this configuration, when the rotor core includes an odd number of stage cores, for example, a first stage core, a second stage core, and a third stage core, the permanent magnet of the first stage core and the permanent magnet of the second stage core may be arranged to be spaced apart by a preset angle along the same circumferential direction compared to the permanent magnet of the second stage core in the center.

Here, when the first stage core, the second stage core, and the third stage core are coupled in a vertical direction, the third stage core may have an inverted shape (a shape in which upper and lower surfaces are turned over) of the first stage core.

When the rotor core includes an even number of stages cores, for example, a first stage core, a second stage core, a third stage core, and a fourth stage core, the permanent magnet of the second stage core and the permanent magnet of the third stage core may be arranged on the same position with respect to a horizontal line passing through the axial center of the rotor core, and the permanent magnet of the first-stage core and the permanent magnet of the fourth-stage core may be arranged by being rotated by a preset angle in the same circumferential direction.

In an embodiment, the rotor core may further include balance slots formed between the first group and the second group.

This can suppress an occurrence of rotational unbalance during the rotation of the rotor core.

In an embodiment, the balance slots may be arranged to form right angles with the second guide slot of the first group and the second guide slot of the second group, respectively.

This can further suppress the occurrence of the rotational unbalance of the rotor core.

Here, the balance slots may have the same shape and size as the second guide slot.

This configuration can facilitate the manufacturing of the balance slots.

In an embodiment, the permanent magnet may include a first magnet arranged in the circumferential direction of the rotor core or a pair of second magnets arranged spaced apart from each other along the circumferential direction of the rotor core and forming a preset internal angle.

Here, the permanent magnet may have alternately different magnetic poles (N pole and S pole) along the circumferential direction.

The first and second magnets may be implemented in a rectangular parallelepiped shape on a plate.

In an embodiment, the permanent magnet may include the first magnet.

Accordingly, the permanent magnet can be arranged close to an air gap, thereby increasing magnetic force.

In an embodiment, the permanent magnet may include the second magnets.

This can increase an amount of permanent magnets, thereby increasing a magnetic flux generation.

In an embodiment, the permanent magnet may include the first magnet and the pair of second magnets, and the first magnet may be arranged between the pair of second magnets along the circumferential direction.

This can further increase the amount of permanent magnets, thereby further increasing the output.

In an embodiment, flux barriers may be arranged on ends of the pair of second magnets, respectively, and the flux barriers of the pair of second magnets may be arranged parallel to a center line passing through the center of the magnetic pole along the radial direction.

In an embodiment, the center of the second guide slot may be arranged on a center line of a radially outer magnetic pole, the center of the first guide slot may be arranged at a point spaced apart from the center line of the radially outer magnetic pole by a preset angle in one direction along the circumferential direction, and the center of the second guide slot may be arranged at a point spaced apart from the center line of the radially outer magnetic pole by a preset angle in another direction along the circumferential direction.

In this way, the rotor core may be implemented in which the permanent magnets are arranged to form a skew angle, the magnetic steel plates have the same shape, and two or three stage cores are arranged along the axial direction.

According to one or more embodiments, a method for manufacturing a rotor of a motor, which includes a rotation shaft, a rotor core including a first stage core to an n-th stage core each having a plurality of stacked magnetic steel plates, and coupled to the rotation shaft, and permanent magnets coupled to each of the first stage core to the n-th stage core to form a plurality of magnetic poles, includes: punching the plurality of magnetic steel plates so that the plurality of magnetic steel plates each include a rotation shaft hole to which the rotation shaft is coupled, permanent magnet coupling parts to which the permanent magnets are coupled, and guide slots into which a guide pin is inserted to guide the permanent magnets arranged in each of the first stage core to the n-th stage core to form a preset skew angle, wherein the guide slots are arranged on a radial inside of the plurality of magnetic poles, each of the guide slots includes a first guide slot, a second guide slot, and a third guide slot spaced apart along a circumferential direction, and the first guide slot, the second guide slot, and the third guide slot are arranged at positions forming a preset angle with respect to a center of a magnetic pole on a radial outside; forming each of the first stage core to the n-th stage core by stacking the plurality of magnetic steel plates; coupling the permanent magnets to the first stage core to the n-th stage core, respectively; coupling a guide slot of the first stage core through a guide slot of the n-th stage core to the guide pin along the axial direction so that the permanent magnets arranged in the first stage core to the n-th stage core are rotated by a preset angle in one direction or another direction along the circumferential direction, to form the skew angle; and coupling the rotation shaft to the rotation shaft hole of each of the first stage core to the n-th stage core.

This can facilitate the manufacturing of the rotor core by ensuring that each magnetic steel plate of the first stage core to the n-th stage core has the same shape.

Each permanent magnet of the first stage core to the n-th core can be arranged to form a preset skew angle with respect to the axial direction, thereby suppressing a generation of vibration and noise caused by cogging torque.

### Advantageous Effects of Invention

As described above, according to an embodiment, a rotor core includes a plurality of stage cores, i.e., a first stage core to an n-th stage core each having a plurality of magnetic steel plates, and coupled in an axial direction, each of the plurality of magnetic steel plates includes a rotation shaft hole, permanent magnet coupling parts, and guide slots in which a guide pin for guiding permanent magnets to form a skew angle is inserted, the guide slots are arranged on a radial inside of the plurality of magnetic poles, each of the guide slots includes a first guide slot, a second guide slot, and a third guide slot spaced apart along a circumferential direction, and the first guide slot, the second guide slot, and the third guide slot are respectively arranged on positions forming a preset angle with respect to a center of a magnetic pole on a radial outside, whereby the magnetic steel plates of the respective stage cores of the rotor core can be unified into the same shape.

The permanent magnet arranged in each stage core of the rotor core may be arranged to form the skew angle with respect to the axial direction, thereby suppressing a generation of vibration and noise caused by cogging torque.

The guide slot may include a first group including the first guide slot, the second guide slot, and the third guide slot, and a second group formed rotationally symmetrical to the first group with respect to a center of the rotor core, thereby facilitating coupling of the plurality of stage cores of the rotor core.

Each of the first guide slot, the second guide slot, and the third guide slot may include a first guide hole and a second guide hole, thereby unifying the shape of the magnetic plates of the rotor core having an even number of stages.

In case that the n-th stage core is configured as a second stage core, the guide pin may be inserted into each of the first guide hole of the second guide slot of the first stage core and the second guide hole of the second guide slot of the second stage core, so that the shapes of the magnetic steel plates of the first stage core and the second stage core can be unified and the permanent magnets can be arranged to form the skew angle.

Each of the first guide slot, the second guide slot, and the third guide slot may include a first guide hole and a second guide hole, thereby unifying the shapes of the magnetic steel plates of the rotor core having an even number of stages and an odd number of stages.

In case that the n-th stage core is configured as a third stage core, the guide pin may be inserted into each of the first guide hole of the second guide slot of the first stage core, the second guide hole of the second guide slot of the second stage core, and the third guide hole of the second guide slot of the third stage core, so that the shapes of the magnetic steel plates of the first stage core, the second stage core, and the third stage core can be unified and the permanent magnets can be arranged to form the skew angle.

An internal angle A between the guide holes may be obtained by dividing a skew angle TA by a number TN-1, obtained by subtracting 1 from a number TN of the n-th stage core, so that the axially divided permanent magnets can be arranged to form a preset skew angle.

In addition, the first guide slot and the third guide slot may be formed symmetrically with respect to a center line passing through the center of the second guide slot along the radial direction. Accordingly, when the first to n-th stage cores are coupled in the axial direction, the permanent magnets arranged in the first to n-th stage cores can be arranged to form a preset skew angle.

The permanent magnets of the first stage core to the n-th stage core may be arranged such that permanent magnets of stage cores farther away from a horizontal line, passing through axial centers of the first stage core to the n-th stage core, are spaced apart to form a preset skew angle in a same circumferential direction. Accordingly, the stage cores arranged on one side and the stage cores arranged on another side with respect to the horizontal line may have inverted shapes relative to each other.

The rotor core may have balance slots formed between the first group and the second group, thereby suppressing an occurrence of rotational unbalance during rotation of the rotor core.

The balance slots may be arranged to form right angles with the second guide slot of the first group and the second guide slot of the second group, respectively, thereby more effectively suppressing the occurrence of rotational unbalance during rotation of the rotor core.

The center of the second guide slot may be arranged on a center line of a radially outer magnetic pole, the center of the first guide slot may be arranged at a point spaced apart from the center line of the radially outer magnetic pole by a preset angle in one direction along the circumferential direction, and the center of the second guide slot may be arranged at a point spaced apart by a preset angle in another direction from the center line of the radially outer magnetic pole along the circumferential direction. This may result in arranging the permanent magnets to form the skew angle and the magnetic stee plates of the respective stage cores to have the same shape.

### Brief Description of Drawings

FIG. 1 is a perspective view of a rotor of a motor according to an embodiment.
FIG. 2 is a lateral view of a rotor core of FIG. 1.
FIG. 3 is a planar view of the rotor core of FIG. 2.
FIG. 4 is a planar view of a magnetic steel plate of FIG. 1.
FIG. 5 is an enlarged view of a main part of FIG. 4.
FIG. 6 is a perspective view of a rotor of a motor according to an embodiment.
FIG. 7 is a lateral view of a rotor core of FIG. 6.
FIG. 8 is a planar view of the rotor core of FIG. 7.
FIG. 9 is a planar view of a magnetic steel plate of FIG. 6.
FIG. 10 is an enlarged view of a main part of FIG. 9.
FIG. 11 is a perspective view of a rotor of a motor according to another embodiment.
FIG. 12 is a planar view of a magnetic steel plate of the rotor core of FIG. 11.
FIG. 13 is an enlarged view of a main part of FIG. 12.
FIG. 14 is a lateral view of a rotor of motor according to another embodiment.
FIG. 15 is a planar view of a magnetic steel plate of the rotor core of FIG. 14.
FIG. 16 is an enlarged view of a main part of FIG. 15.
FIG. 17 is a view of a method for manufacturing a rotor of a motor according to an embodiment.

### Mode for the Invention

Hereinafter, embodiments disclosed in this specification will be described in detail with reference to the accompanying drawings. In this specification, the same or equivalent components may be provided with the same or similar reference numbers even in different embodiments, and description thereof will not be repeated. A singular representation used herein may include a plural representation unless it represents a definitely different meaning from the context. In describing the present invention, if a detailed explanation for a related known technology or construction is considered to unnecessarily divert the gist of the present disclosure, such explanation has been omitted but would be understood by those skilled in the art. It should be noted that the attached drawings are provided to facilitate understanding of the embodiments disclosed in this specification, and should not be construed as limiting the technical idea disclosed in this specification by the attached drawings.

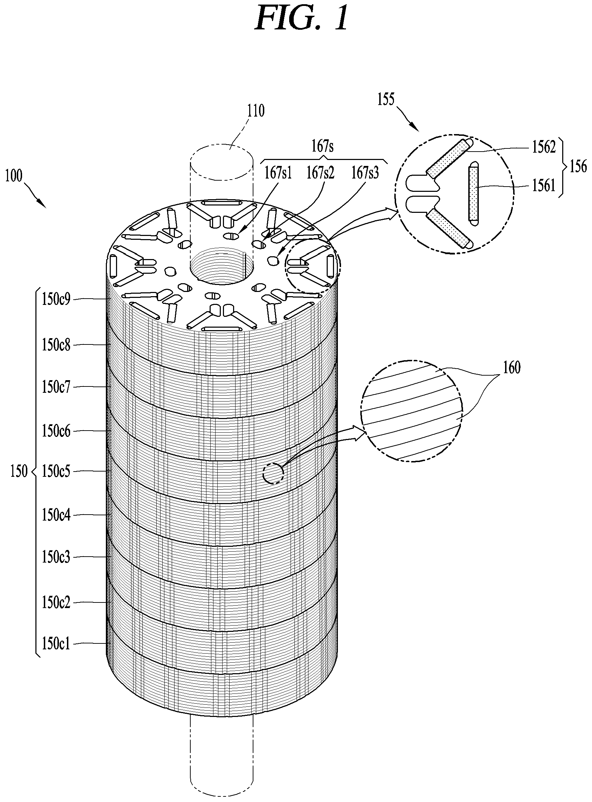

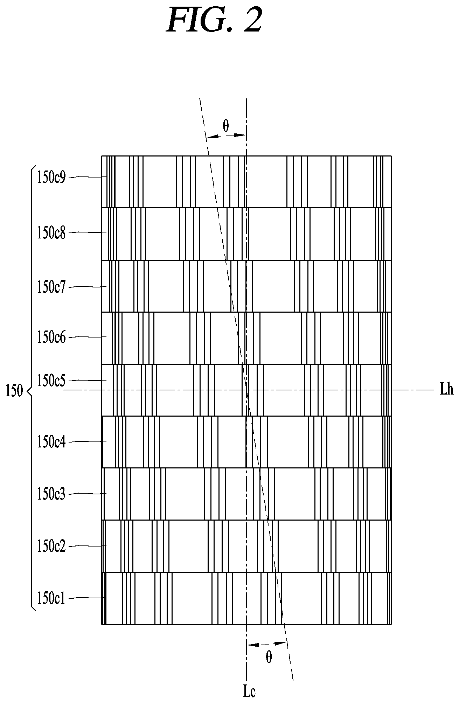

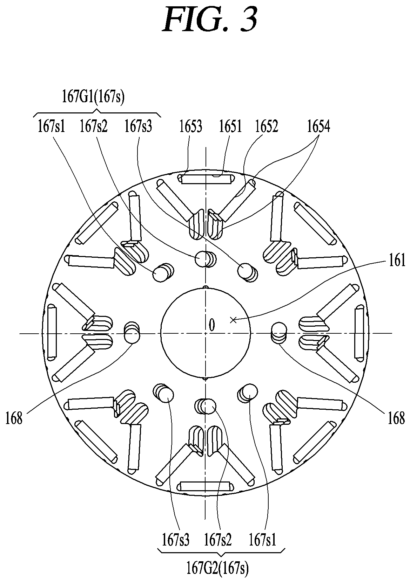

FIG. 1 is a perspective view of a rotor of a motor according to an embodiment, FIG. 2 is a lateral view of a rotor core of FIG. 1, and FIG. 3 is a planar view of the rotor core of FIG. 2. As illustrated in FIGS. 1 to 3, a rotor 100 of a motor according to an embodiment may include a rotation shaft 100 and a rotor core 150.

The rotation shaft 110 may be formed in a shape of a circular cylinder, for example.

The rotor core 150 may be formed, for example, in a cylindrical shape.

The rotor core 150 may include a plurality of magnetic steel plates 160.

The rotor core 150 may include a plurality of magnetic steel plates 160 stacked in an insulating manner along an axial direction.

The rotor core 150 may include a plurality of stage cores coupled to the rotation shaft 110 along the axial direction.

The plurality of stage cores may include, for example, two through nine stages.

In this embodiment, the plurality of stage cores may include, for example, a first stage core 150c1, a second stage core 150c2, a third stage core 150c3, a fourth stage core 150c4, a fifth stage core 150c5, a sixth stage core 150c6, a seventh stage core 150c7, an eighth stage core 150c8, and a ninth stage core 150c9.

The plurality of stage cores may each include a plurality of magnetic steel plates 160.

In this embodiment, each magnetic steel plate 160 of the first stage core 150c1 to the ninth stage core 150c9 may have the same shape.

In this embodiment, the first stage core 150c1 may be, for example, arranged on one end (a lower end in the drawing) of the rotor core 150 along the axial direction, and the ninth stage core 150c9 may be arranged on another end (upper end in the drawing) of the rotor core 150.

The plurality of stage cores may each have a rotation shaft hole 161 to accommodate the rotation shaft 110.

The rotation shaft hole 161 may be formed axially through the center of each of the plurality of stage cores.

The rotor core 150 may include a plurality of magnetic poles 155.

The rotor core 150 may be configured so that different magnetic poles 155 (N pole, S pole) are alternately arranged along the circumferential direction.

In this embodiment, the rotor core 150 may have, for example, eight poles.

This embodiment illustrates that the rotor 150 has eight poles. However, this is merely illustrative and the disclosure is not limited thereto.

The rotor core 150 may include, for example, a permanent magnet 156 arranged in each of the plurality of stage cores.

The permanent magnet 156 may include magnets arranged in a spacing manner along the circumferential direction of the rotor core 150 to form the plurality of magnetic poles 155.

The permanent magnet 156 may be coupled to each of the plurality of stage cores.

In some embodiments, the permanent magnet 156 may be arranged in each of the first stage core 150c1 to the ninth stage core 150c9.

The permanent magnet 156 may have a length corresponding to an axial length of each stage core.

The permanent magnet 156 may be, for example, inserted along the axial direction into each stage core of the rotor core 150.

This embodiment illustrates an example in which the permanent magnet 156 is inserted into each stage core of the rotor core 150 in the axial direction, but this is merely illustrative and the disclosure is not limited to this.

Although not specifically illustrated in the drawings, the rotor core 150 may include a permanent magnet 156 arranged on (coupled to) an outer circumferential surface of each of the plurality of stage cores. In this case, the permanent magnet 156 may be formed in a cylindrical shape or an arcuate shape.

The permanent magnet 156 may have a rectangular hexahedron shape with a thin thickness, for example.

The permanent magnet 156 may include, for example, a plurality of first magnets 1561 spaced apart along the circumferential direction of the rotor core 150.

The permanent magnet 156 may include, for example, second magnets 1562 spaced apart along the circumferential direction and forming a pair per each pole.

In this embodiment, the permanent magnet 156 may include one first magnet 1561 and two second magnets 1562 (one pair) per one pole.

In this embodiment, the permanent magnet 156 may include eight first magnets 1561 and eight pairs of second magnets 1562 for each stage core.

The permanent magnets 156 of the first stage core 150c1 to the ninth stage core 150c9 may be arranged to form a preset skew angle θ with respect to the axial direction (vertical line).

The skew angle θ may be set, for example, in a range of 1 to 11 degrees.

In some embodiments, based on the permanent magnet 156 of the fifth stage core 150c5, the permanent magnet 156 of the fourth stage core 150c4 may be arranged by being shifted by a preset angle in one direction (to the right in the drawing) along the circumferential direction, while the permanent magnet 156 of the sixth stage core 150c6 may be arranged by being shifted by a preset angle in another direction (to the left in the drawing).

Similarly, the permanent magnet 156 of the third stage core 150c3 positioned below the fourth stage core 150c4 may be arranged by being shifted by a preset angle in the one direction (to the right in the drawing), relative to the permanent magnet 156 of the fourth stage core 150c4, while the permanent magnet 156 of the seventh stage core 150c7 positioned above the sixth stage core 150c6 may be arranged by being shifted by a preset angle in the another direction (to a lower side in the drawing), relative to the permanent magnet 156 of the sixth stage core 150c6.

In the above-described manner, the permanent magnets 156 of the fourth stage core 150c4, the third stage core 150c3, the second stage core 150c2, and the first stage core 150c1, which are positioned below the fifth stage core 150c5, may be arranged by being sequentially shifted by a preset angle A in the one direction (to the right in the drawing), while the permanent magnets 156 of the sixth stage core 150c6, the seventh stage core 150c7, the eighth stage core 150c8, and the ninth stage core 150c9, which are positioned above the fifth stage core 150c5, may be arranged by being sequentially shifted by the preset angle A in the another direction (to the left in the drawing).

A straight line connecting from a center of the permanent magnet 156 of the ninth stage core 150c9 to a center of the permanent magnet 156 of the first stage core 150c1 may be arranged to form the skew angle θ with an axial straight line Lv of the rotor core 150.

Accordingly, cogging torque which acts between the permanent magnet 156 and the stator during rotation of the rotor core 150 can be remarkably reduced.

With this configuration, an occurrence of vibration and noise due to the cogging torque can be significantly reduced during the rotation of the rotor 100.

This may allow the rotor 100 to perform a quiet operation during the rotation.

In this embodiment, the rotor core 150 may include a plurality of guide slots 167s that guide the permanent magnet 156 of each stage core to form the skew angle θ.

The plurality of guide slots 167s may include, for example, a first guide slot 167s1, a second guide slot 167s2, and a third guide slot 167s3 spaced apart along the circumferential direction.

The plurality of guide slots 167s may include, for example, a first group 167G1 that includes the first guide slot 167s1, the second guide slot 167s2, and the third guide slot 167s3, and a second group 167G2 that includes the first guide slot 167s1, the second guide slot 167s2, and the third guide slot 167s3 formed to be rotationally symmetrical to the corresponding guide slots 167s of the first group 167G1 based on the center of the rotor core 150.

This configuration can facilitate axial coupling of the plurality of stage cores.

In some embodiments, the second guide slot 167s2 of the first group 167G1 and the second guide slot 167s2 of the second group 167G2 may be arranged to oppose each other in a vertical (up-to-down) direction in the drawing.

For example, the first guide slot 167s1 of the first group 167G1 may be formed on one side (a left side in the drawing) of the second guide slot 167s2 of the first group 167G1 in the drawing, and the first guide slot 167s1 of the second group 167G2 may be arranged on another side (a right side in the drawing) of the second guide slot 167s2 of the second guide group 167G2 in the drawing.

In another example, the third guide slot 167s3 of the first group 167G1 may be formed on another side (a right side in the drawing) of the second guide slot 167s2 of the first group 167G1 in the drawing, and the third guide slot 167s3 of the second group 167G2 may be arranged on another side (a left side in the drawing) of the second guide slot 167s2 of the second guide group 167G2 in the drawing.

The rotor core 150 may include balance slots 168 formed between the first group 167G1 and the second group 167G2.

This can suppress an occurrence of rotational unbalance due to a weight difference during the rotation of the rotor 100.

The balance slot 168 may have the same shape as the guide slot 167s, for example.

The balance slots 168 may be arranged, for example, at positions forming right angles respectively with the second guide slot 167s2 of the first group 167G1 and the second guide slot 167s2 of the second group 167G2.

The plurality of guide slots 167s may include, for example, guide holes 167h, respectively, having centers spaced apart along the circumferential direction.

In this embodiment, the guide holes 167h of each of the plurality of guide slots 167s may be arranged as a plurality of guide holes.

In this embodiment, the plurality of guide holes 167h of each of the plurality of guide slots 167s may include a first guide hole 167h1, a second guide hole 167h2, and a third guide hole 167h3.

Here, a distance between centers of adjacent guide holes of the plurality of guide holes 167h may be smaller than a diameter of each of the plurality of guide holes 167h.

That is, the plurality of guide holes 167h may be arranged to overlap each other in one region.

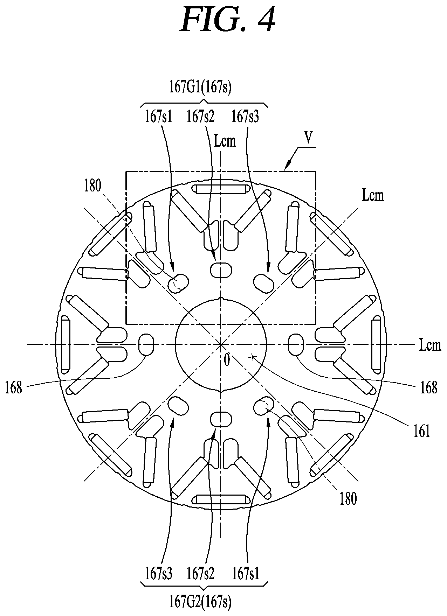

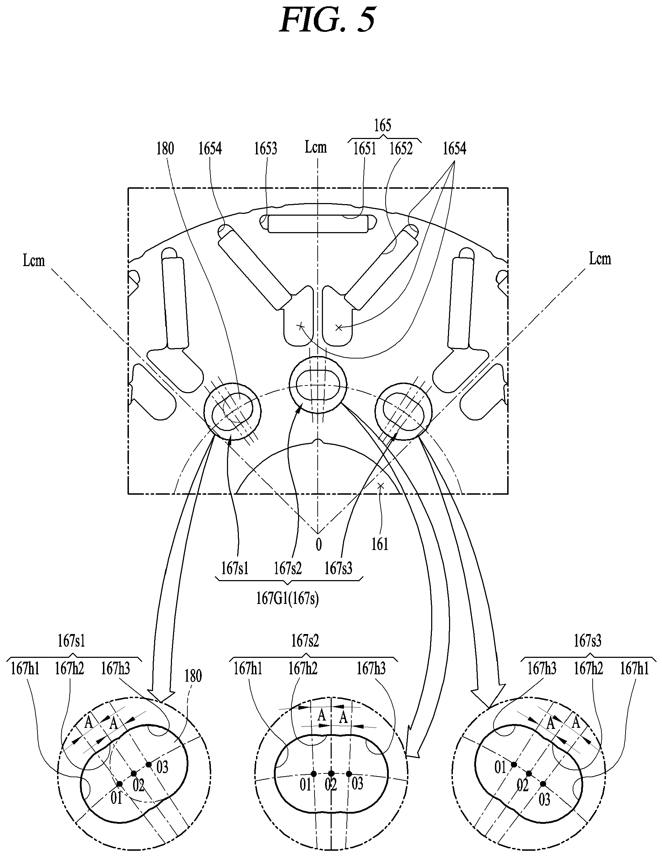

FIG. 4 is a planar view of a magnetic steel plate of FIG. 1, and FIG. 5 is an enlarged view of a main part of FIG. 4. As illustrated in FIGS. 4 and 5, the magnetic steel plate 160 may be formed in a circular plate shape, for example. Here, the magnetic steel plate 160 may have a thin thickness of less than 1 mm.

The magnetic steel plate 160 may include a rotation shaft hole 161 formed through a center thereof such that the rotation shaft 110 is inserted.

The rotation shaft hole 161 may be formed axially through the magnetic steel plate 160.

The magnetic steel plate 160 may include a permanent magnet coupling part 165 to which the permanent magnet 156 may be coupled.

In this embodiment, the permanent magnet coupling part 165 may be formed so that the permanent magnet 156 may be inserted into the rotor core 150 (the corresponding stage core) along the axial direction.

The permanent magnet coupling part 165 may be formed axially through the magnetic steel plate 160.

The permanent magnet coupling part 165 may include, for example, a first magnet insertion portion 1651 into which the first magnet 1561 is inserted.

The permanent magnet coupling part 165 may include, for example, second magnet insertion portions 1652 into which the second magnets 1562 are inserted.

The first magnet insertion portion may be formed so that opposite ends thereof are close to the circumference of the rotor core 150 (the magnetic steel plate 160).

The second magnet insertion portions 1652 may each be formed such that one end is close to the circumference of the rotor core 150 (the magnetic steel plate 160) and another end opposes the inside of the rotor core 150 (the magnetic steel plate 160).

The second magnet insertion portions 1652 may be arranged in a "V" shape so that a distance between inner ends is shorter than a distance between outer ends.

The first magnet insertion portion 1651 may be arranged between the second magnet insertion portions 1652.

The first magnet insertion portion 1651 may be formed symmetrically with respect to, for example, a center line connecting the center of the magnetic pole 155 and the center of the rotor core 150.

The second magnet insertion portions 1652 may be formed symmetrically to each other with respect to, for example, the center line connecting the center of the magnetic pole 155 and the center of the rotor core 150.

Flux barriers may be formed through opposite ends of the first magnet insertion portion 1651, respectively.

Flux barriers may be formed through opposite ends of each of the second magnet insertion portions 1652.

The flux barrier at an inner end of the second magnet insertion portion 1652 may extend along the center line.

The flux barrier at the inner end of the second magnet insertion portion 1652 may be formed to have a relatively larger size than the flux barrier at an outer end.

This can suppress magnetic force of the second magnet 1562 from moving toward the center of the rotor core 150.

In some embodiments, each of the plurality of guide slots 167s may include a first guide slot 167s1, a second guide slot 167s2, and a third guide slot 167s3 spaced apart along the circumferential direction.

In this embodiment, the center of the second guide slot 167s2 may be located on the center line connecting the center of the magnetic pole 155 and the center of the rotor core 150.

In some embodiments, the second guide slot 167s2 may be formed symmetrically with respect to the center line of the magnetic pole 155.

The first guide slot 167s1 and the second guide slot 167s2 may be formed symmetrically with respect to the center line of the magnetic pole 155.

Each of the plurality of guide slots 167s may include a first guide hole 167h1, a second guide hole 167h2, and a third guide hole 167h3.

The first guide hole 167h1, the second guide hole 167h2, and the third guide hole 167h3 may be formed with their centers spaced apart along the circumferential direction.

The centers of the first guide hole 167h1, the second guide hole 167h2, and the third guide hole 167h3 may be spaced apart from one another on the same circumference.

The center of the second guide hole 167h2 of the second guide slot 167s2 may be arranged on the center line of the magnetic pole 155 which connects the center of the magnetic pole 155 and the center of the rotor core 150 (the magnetic steel plate 160).

Here, the first guide hole 167h1 to the third guide hole 167h3 of each guide slot 167s may be configured so that each of their centers is shifted at a preset angle A.

The angle A between the centers of the guide holes 167h may indicate an internal angle between the first guide hole 167h1 and the second guide hole 167h2.

The internal angle A between the guide holes 167h may be a value (A=TA/(TN-1)) obtained, for example, by dividing a skew angle TA of the permanent magnet 156 by a number TN-1, which is obtained by subtracting 1 from the number TN of stage cores.

In this embodiment, in case that the number TN of stage cores is 9 and the skew angle TA of the permanent magnet 156 is 8 degrees, the internal angle A of the guide hole 167h may be set to 8/(9-1)=1 degree.

That is, the internal angle between the first guide hole 167h1 and the second guide hole 167h2 may be 1 degree, and the internal angle between the second guide hole 167h2 and the third guide hole 167h3 may be 1 degree.

The first guide hole 167h1 may be formed at a position shifted by 1 degree in the circumferential direction with respect to the second guide hole 167h2, and the third guide hole 167h3 may be formed at a position shifted by 1 degree in the circumferential direction with respect to the second guide hole 167h2.

The center of the first guide slot 167s1 may be formed at a position shifted by a preset angle with respect to the center line of the magnetic pole 155.

In this embodiment, the first guide slot 167s1 may be formed at a point that is shifted by a preset angle in one direction (to the left in the drawing) along the circumferential direction from the center line of the second guide slot 167s2.

In some embodiments, the first guide slot 167s1 may be configured to form a preset angle (an internal angle) with the second guide slot 167s2.

The angle (the internal angle) between the first guide slot 167s1 and the second guide slot 167s2 may be obtained as 360 degrees/P-N*A. Here, P denotes the number of magnetic poles 155 of the rotor, and N denotes the number of guide holes 167h.

The center line of the first guide slot 167s1 may form an angle of 360/8-3*1=42 degrees with the center line of the second guide slot 167s2.

The third guide slot 167s3 may be formed at a point where the center line of the third guide slot 167s3 forms a preset angle (360 degrees/P-N*A) in another direction (to the right in the drawing) along the circumferential direction from the center line of the second guide slot 167s2.

In some embodiments, the center line of the first guide slot 167s3 may form an angle of 360/8-3*1=42 degrees with the center line of the second guide slot 167s2.

The second guide hole 167h2 of the second guide slot 167s2 may be arranged at the center of the magnetic pole 155, and thus the permanent magnet 156 may have its center arranged at the center line of the magnetic pole 155.

The first guide hole 167h1 of the second guide slot 167s2 may be shifted by the preset angle A in one direction (to the left in the drawing) along the circumferential direction from the second guide hole 167h2. Accordingly, the permanent magnet 156 may be arranged at a position that is shifted in another direction (to the right in the drawing) relative to the first guide hole 167h1 along the circumferential direction.

The third guide hole 167h3 of the third guide slot 167s3 may be shifted by the preset angle A along the circumferential direction from the second guide hole 167h2 in the another direction (to the right in the drawing). Accordingly, the permanent magnet 156 may be positioned at a position that is shifted relative to the third guide hole 167h3 in the one direction (to the left in the drawing) along the circumferential direction.

The first guide slot 167s1 may be located at a position where its center is shifted by an angle 3A from the center of the magnetic pole 155 in the one direction (to the right in the drawing), and the first guide hole 167h1, the second guide hole 167h2, and the third guide hole 167h3 may be formed at positions each shifted by the angle A, so that the center of the first guide hole 167h1 of the first guide slot 167s1 may be located at a position shifted by an angle 2A from the center of the magnetic pole 155 in the one direction (to the right in the drawing) along the circumferential direction.

Based on the first guide hole 167h1 of the first guide slot 167s1, the permanent magnet 156 on the radially outer side of the first guide slot 167s1 may be arranged at a position that is relatively shifted by the angle 2A in the another direction (to the left in the drawing) along the circumferential direction.

Based on the second guide hole 167h2 of the first guide slot 167s1, the permanent magnet 156 on the radially outer side of the first guide slot 167s1 may be arranged at a position that is relatively shifted by the angle 3A in the another direction (to the left in the drawing) along the circumferential direction.

Based on the third guide hole 167h3 of the first guide slot 167s1, the permanent magnet 156 on the radially outer side of the first guide slot 167s1 may be arranged at a position that is relatively shifted by an angle 4A in the another direction (to the left in the drawing) along the circumferential direction.

In some embodiments, the third guide slot 167s3 may be located at a position shifted by the angle 3A from the center of the magnetic pole 155 in the another direction (to the left in the drawing), and the first guide hole 167h1, the second guide hole 167h2, and the third guide hole 167h3 of the third guide slot 167s3 may be located at positions each shifted by the angle A, so that the center of the third guide hole 167h3 of the third guide slot 167s3 may be located at a position shifted by the angle 2A from the center of the magnetic pole 155 in the another direction (to the left in the drawing).

Based on the third guide hole 167h3 of the third guide slot 167s3, the permanent magnet 156 on the radially outer side of the first guide slot 167s1 may be arranged at a position that is relatively shifted by the angle 2A in the one direction (to the right in the drawing) along the circumferential direction.

Based on the second guide hole 167h2 of the third guide slot 167s3, the permanent magnet 156 on the radially outer side of the third guide slot 167s3 may be arranged at a position that is relatively shifted by the angle 3A in the one direction (to the right in the drawing) along the circumferential direction.

Based on the third guide hole 167h3 of the third guide slot 167s3, the permanent magnet 156 on the radially outer side of the third guide slot 167s3 may be positioned at a position that is relatively shifted by the angle 4A in the one direction (to the right side in the drawing) along the circumferential direction.

With this configuration, the first stage core 150c1 to the ninth stage core 150c9 may be axially stacked using guide pins 180.

The two guide pins 180 may be accommodated in the corresponding guide holes 167h.

A guide surface may be formed on an end portion of each guide pin 180.

The guide surface may be configured so that an outer width gradually decreases along a protruding direction.

This may facilitate coupling between the plurality of stage cores and the guide pins 180.

The guide surface may be formed, for example, so that its cross-section forms a straight line or an outwardly convex curve.

The first stage core 150c1 may be coupled so that the two guide pins 180 positioned opposite to each other are each inserted into the first guide hole 167h1 of the third guide slot 167s3.

The second stage core 150c2 may be coupled so that the two guide pins 180 are each inserted into the second guide hole 167h2 of the third guide slot 167s3.

The third stage core 150c3 may be coupled so that the two guide pins 180 are each inserted into the third guide hole 167h3 of the third guide slot 167s3.

The fourth stage core 150c4 may be coupled so that the two guide pins 180 are each inserted into the first guide hole 167h1 of the second guide slot 167s2.

The fifth stage core 150c5 may be coupled so that the two guide pins 180 are each inserted into the second guide hole 167h2 of the second guide slot 167s2.

The sixth stage core 150c6 may be coupled so that the two guide pins 180 positioned opposite to each other are each inserted into the third guide hole 167h3 of the second guide slot 167s2.

The seventh stage core 150c7 may be coupled so that the two guide pins 180 are each inserted into the first guide hole 167h1 of the first guide slot 167s1.

The eighth stage core 150c8 may be coupled so that the two guide pins 180 are each inserted into the second guide hole 167h2 of the first guide slot 167s1.

The ninth stage core 150c9 may be coupled so that the two guide pins 180 are each inserted into the third guide hole 167h3 of the first guide slot 167s1.

According to this configuration, the permanent magnet 156 of the sixth stage core 150c6 can be arranged at a position that is rotated relative to the permanent magnet 156 of the fifth stage core 150c5, which is positioned in the center in the axial direction of the rotor core 150, by the preset angle A in the one direction (to the left in the drawing) along the circumferential direction.

Similarly, the permanent magnet 156 of the seventh stage core 150c7 may be shifted to the left by the angle A relative to the permanent magnet 156 of the sixth stage core 150c6, and the permanent magnet 156 of the eighth stage core 150c8 and the permanent magnet 156 of the ninth stage core 150c9 may also be arranged at positions that are sequentially rotated by the angle A, respectively.

The permanent magnet 156 of the fourth stage core 150c4 may be arranged at a position that is rotated relative to the permanent magnet 156 of the fifth stage core 150c5 by the angle A in the another direction (to the right in the drawing).

The permanent magnet 156 of the third stage core 150c3, the permanent magnet 156 of the second stage core 150c2, and the permanent magnet 156 of the first stage core 150c1 may be arranged at positions that are sequentially relatively rotated by the preset angle A in the another direction (to the right in the drawing).

Accordingly, the permanent magnets 156 of the first stage core 150c1 to the ninth core 150c9 may be arranged to form the skew angle θ with respect to the axial direction, so that cogging torque generated during the rotation of the rotor core 150 can be significantly reduced.

This may reduce an occurrence of vibration and noise due to the cogging torque, thereby enabling a quiet operation of the rotor.

In this embodiment, although not specifically illustrated in the drawings, the rotor core 150 may alternatively be configured with two to eight stages by using the coupling method of the rotor core 150 with the nine stages. For example, in case that the rotor core 150 is configured with two stages, the two-stage rotor core 150 may be coupled in a manner of inserting the guide pins 180 into the guide holes 167h of the guide slots 167s of two stage cores adjacent to each other among the nine stage cores such that a lower stage core is first coupled and an upper stage core is coupled later. Likewise, the rotor core 150 each including three to eight stage cores may be stacked (coupled) by sequentially coupling 3 to 8 consecutive stage cores, among the nine stage cores of the rotor core 150, to the guide pins 180 using the coupling sequence of the three to eight consecutive stage cores.

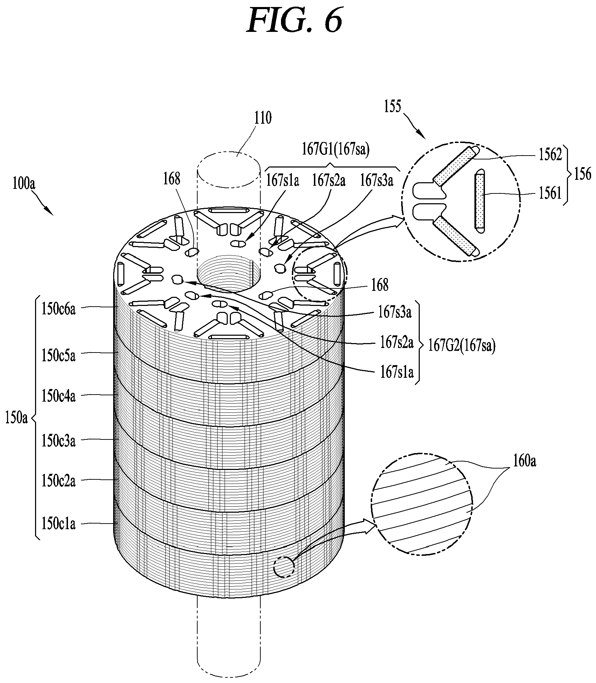

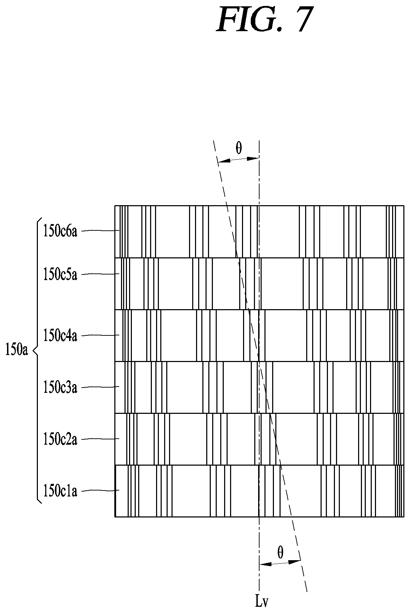

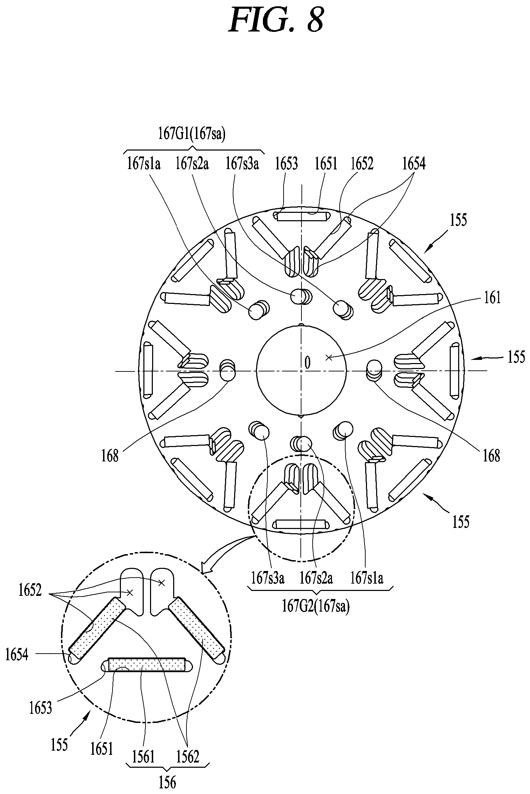

FIG. 6 is a perspective view of a rotor of a motor according to another embodiment, FIG. 7 is a lateral view of a rotor core of FIG. 6, and FIG. 8 is a planar view of the rotor core of FIG. 7. As illustrated in FIGS. 6 to 8, a rotor 100a of a motor according to this embodiment may include a rotation shaft 100 and a rotor core 150a.

The rotation shaft 110 may be formed in a shape of a circular cylinder, for example.

The rotor core 150a may be formed, for example, in a cylindrical shape.

The rotor core 150a may include a rotation shaft hole 161 formed through its center such that the rotation shaft 110 is inserted.

The rotation shaft hole 161 may be formed axially through the rotor core 150a.

The rotor core 150a may include a plurality of magnetic steel plates 160a.

The rotor core 150a may include a plurality of stage cores coupled along the axial direction.

The plurality of stage cores may be implemented, for example, as an even number.

In this embodiment, the plurality of stage cores may be implemented with two stages, four stages, or six stages.

In this embodiment, the plurality of stage cores may include a first stage core 150c1a, a second stage core 150c2a, a third stage core 150c3a, a fourth stage core 150c4a, a fifth stage core 150c4a, and a sixth stage core 150c6.

The rotor core 150a may include a plurality of magnetic poles 155.

In this embodiment, the plurality of magnetic poles 155 may include eight poles.

The rotor core 150a may include a permanent magnet 156 provided in each of the plurality of stage cores.

The permanent magnet 156 may be arranged in each of the first stage core 150c1a to the sixth stage core 150c6a.

The permanent magnet 156 may be, for example, inserted along the axial direction into each stage core of the rotor core 150a.

The permanent magnet 156 may have a rectangular hexahedron shape with a thin thickness, for example.

In this embodiment, an example is illustrated in which the permanent magnet 156 is inserted into the rotor core 150a along the axial direction, but this is only an example, and the permanent magnet 156 may alternatively be configured to be coupled to an outer circumferential surface of the rotor core 150a.

The permanent magnet 156 may include, for example, first magnets 1561 spaced apart along the circumferential direction of the rotor core 150a.

The corresponding first magnet 1561 may be arranged with opposite ends close to the outer circumference of the rotor core 150a.

The permanent magnet 156 may include second magnets 1562 forming a pair per one magnetic pole 155.

The second magnet 1562 may be, for example, arranged such that one end (outer end) is positioned close to the outer circumference of the rotor core 150a, and another end (inner end) is positioned close to the center of the rotor core 150a.

In this embodiment, the permanent magnet 156 may include eight first magnets 1561 and eight pairs of second magnets 1562 for each stage core.

In this embodiment, the first stage core 150c1a to the sixth stage core 150c6a may be arranged to form a preset skew angle θ with respect to the axial direction.

Here, the skew angle θ may be set, for example, in a range of 1 to 11 degrees.

In this embodiment, the permanent magnet 156 of the first stage core 150c1a through the permanent magnet 156 of the sixth stage core 150c6a may be arranged at positions that are shifted relative to the permanent magnets 156 of adjacent cores in the axial direction by a preset angle A along the circumferential direction.

Accordingly, the permanent magnet 156 of the first stage core 150c1a through the permanent magnet 156 of the sixth stage core 150c6a may be arranged to form the preset skew angle θ with respect to the axial direction.

This can significantly suppress a generation of cogging torque of the permanent magnet 156 during the rotation of the rotor core 150a.

This may result in suppressing the occurrence of vibration and noise due to the cogging torque.

In this embodiment, the permanent magnet 156 of the third stage core 150c3a and the permanent magnet 156 of the fourth stage core 150c4a that are located in the center may be arranged at positions spaced apart by a preset angle A/2 in one direction (to the left in the drawing) and another direction (to the right in the drawing) from a center line connecting the center of the magnetic pole and the center of the rotor core 150a.

The permanent magnet 156 of the fifth stage core 150c5 may be arranged at a position, which is rotated relative to the permanent magnet 156 of the fourth stage core 150c4a along the circumferential direction by a preset angle A in the one direction (to the left in the drawing).

The permanent magnet 156 of the sixth stage core 150c6a may be arranged at a position, which is rotated relative to the permanent magnet 156 of the fifth stage core 150c5 along the circumferential direction by the preset angle A in the one direction (to the left in the drawing).

In some embodiments, the permanent magnet 156 of the second stage core 150c2a may be arranged at a position, which is rotated relative to the permanent magnet 156 of the third stage core 150c3a along the circumferential direction by the preset angle A in the another direction (to the right in the drawing).

In some embodiments, the permanent magnet 156 of the first stage core 150c1a may be arranged at a position, which is rotated relative to the permanent magnet 156 of the second stage core 150c2a along the circumferential direction by the preset angle A in the another direction (to the right in the drawing).

In some embodiments, the rotor core 150a may include a plurality of guide slots 167s, into which the guide pins 180 are inserted to guide the permanent magnet 156 of each stage core to form the skew angle θ.

The plurality of guide slots 167s may include, for example, a first guide slot 167s1, a second guide slot 167s2a, and a third guide slot 167s3a spaced apart along the circumferential direction.

The plurality of guide slots 167s may include, for example, a first group 167G1 that includes the first guide slot 167s1, the second guide slot 167s2a, and the third guide slot 167s3a, and a second group 167G2 that includes the first guide slot 167s1, the second guide slot 167s2a, and the third guide slot 167s3a formed to be rotationally symmetrical to the corresponding guide slot 167s of the first group 167G1 based on the center of the rotor core 150a.

This configuration can facilitate axial coupling of the plurality of stage cores.

In some embodiments, the rotor core 150a may include balance slots 168 arranged between the first group 167G1 and the second group 167G2.

This can suppress an occurrence of rotational unbalance due to a weight difference during the rotation of the rotor 150a.

The balance slots 168 may be formed, for example, in the same shape as the guide slot 167s of the first group 167G1 and the guide slot 167s of the second group 167G2.

The balance slots 168 may be arranged at positions forming right angles respectively with the second guide slot 167s2a of the first group 167G1 and the second guide slot 167s2a of the second group 167G2.

The second guide slot 167s2a of the first group 167G1, the second guide slot 167s2a of the second group 167G2, and the balance slots 168 may be arranged on the same circumference.

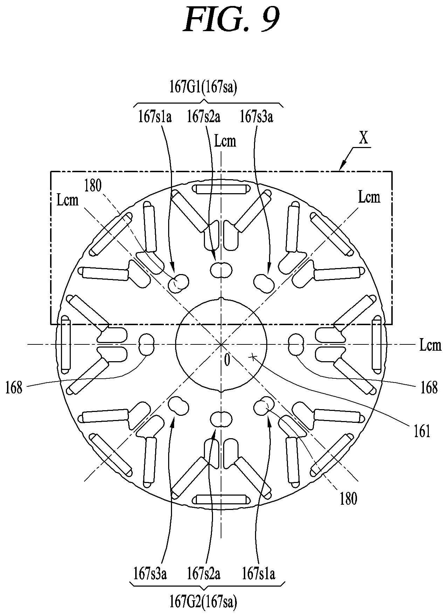

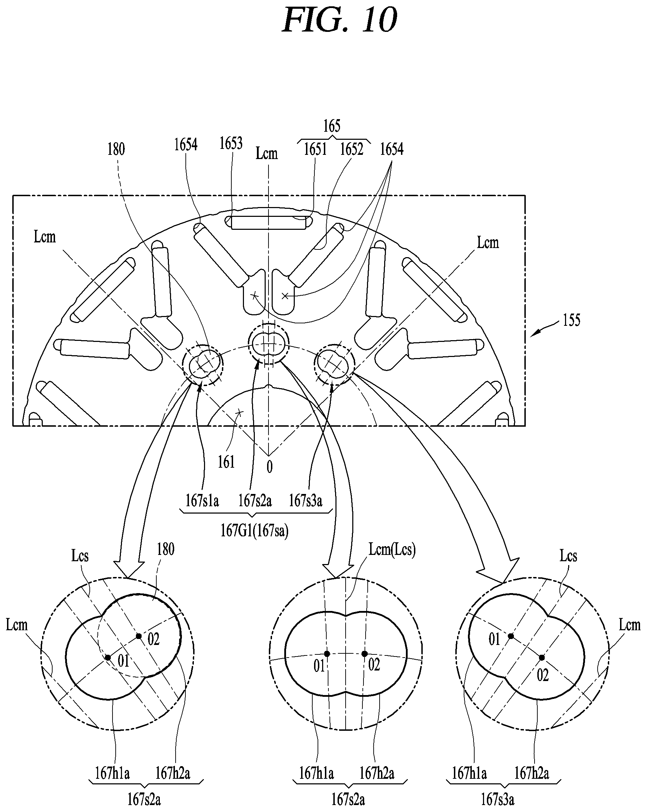

FIG. 9 is a planar view of a magnetic steel plate of FIG. 6, and FIG. 10 is an enlarged view of a main part of FIG. 9. As illustrated in FIGS. 9 and 10, the magnetic steel plate 160a may be formed in a circular plate shape, for example.

A rotation shaft hole 161 may be formed through the center of the magnetic steel plate 160a.

The magnetic steel plate 160a may include a permanent magnet coupling part 165 to which the permanent magnet 156 is coupled.

In this embodiment, the permanent magnet coupling part 165 may be formed so that the permanent magnet 156 may be inserted along the axial direction.

The permanent magnet coupling part 165 may include a first magnet insertion portion 1651 in which the first magnet 1561 is inserted.

The permanent magnet coupling part 165 may include second magnet insertion portions 1652 in which the second magnets 1562 are inserted.

Flux barriers 1653 may be formed through opposite sides of the first magnet insertion portion 1651, respectively.

Flux barriers 1654 may be formed through opposite sides of each of the second magnet insertion portions 1652.

The flux barrier 1654 at an inner end of the second magnet insertion portion 1652 may have a relatively larger size than the flux barrier 1654 at an outer end.

The flux barrier 1654 at the inner end of the second magnet insertion portion 1652 may extend along a center line Lcm of the magnetic pole 155.

In some embodiments, each of the plurality of guide slots 167s may include a first guide slot 167s1a, a second guide slot 167s2a, and a third guide slot 167s3a spaced apart along the circumferential direction.

In this embodiment, the center of the second guide slot 167s2a may be located on the center line connecting the center of the magnetic pole 155 and the center of the rotor core 150a.

The plurality of guide slots 167s may each include a first guide hole 167h1 and a second guide hole 167h2 whose centers are spaced apart along the circumferential direction.

Here, the second guide slot 167s2a may be formed so that its center is arranged on the center line Lcm of the magnetic pole 155.

In this embodiment, the first guide hole 167h1 and the second guide hole 167h2 of each guide slot 167s may be configured so that their centers are shifted by a preset angle A along the circumferential direction.

Here, the preset angle A may indicate an internal angle between a center O1 of the first guide hole 167h1 and a center O2 of the second guide hole 167h2.

The internal angle A between the centers of the guide holes 167h may be a value (A=TA/(TN-1)) obtained, for example, by dividing the skew angle TA of the permanent magnet 156 by a number TN-1, which is obtained by subtracting 1 from the number TN of stage cores.

The first guide hole 167h1 and the second guide hole 167h2 of the second guide slot 167s2a may be arranged at the preset angle A along the circumferential direction, and thus the center line Lcm of the magnetic pole 155 may pass through the center of an arc connecting the center of the first guide hole 167h1 and the center of the second guide hole 167h2.

The first guide hole 167h1 may be shifted by half A/2 of the preset angle A in one direction (to the left in the drawing) with respect to the center line Lcm of the magnetic pole 155.

In another example, the second guide hole 167h2 may be shifted by half A/2 of the preset angle A in another direction (to the right in the drawing) with respect to the center line of the magnetic pole 155.

The third guide slot 167s3a may be formed at a point shifted by a preset distance in the one direction (to the left in the drawing) with respect to the center line Lcm of the magnetic pole 155.

Here, the center of the third guide slot 167s3a may be located at a position shifted by 3A/2 with respect to the center line Lcm of the magnetic pole 155.

The first guide hole 167h1 of the third guide slot 167s3a may be formed at a position shifted in the one direction (to the left in the drawing) by A/2 from the center of the third guide slot 167s3a, and the second guide hole 167h2 of the third guide slot 167s3a may be formed at a position shifted in the another direction (to the right in the drawing) by A/2 from the center of the third guide slot 167s3a.

Accordingly, the first guide hole 167h1 and the second guide hole 167h2 of the third guide slot 167s3a can form the preset angle A along the circumferential direction.

The first guide slot 167s1a may be formed at a point shifted by a preset distance in the one direction (to the left side in the drawing) with respect to the center line Lcm of the magnetic pole 155.

Here, the center (center line Lcs) of the first guide slot 167s1a may be located at a position shifted by 3A/2 with respect to the center line Lcm of the magnetic pole 155.

The first guide hole 167h1 of the first guide slot 167s1a may be formed at a position shifted in the one direction (to the left in the drawing) by A/2 from the center of the first guide slot 167s1a, and the second guide hole 167h2 of the first guide slot 167s1a may be formed at a position shifted in the another direction (to the right in the drawing) by A/2 from the center of the first guide slot 167s1a.

Accordingly, the first guide hole 167h1 and the second guide hole 167h2 of the first guide slot 167s1a can form the preset angle A along the circumferential direction.

With this configuration, in case of coupling the first stage core 150c1a to the sixth stage core 150c6a, the first guide holes 167h1 of the third guide slots 167s3a of the first stage core 150c1a may be coupled to the two guide pins 180, respectively.

Next, the second guide holes 167h2 of the third guide slots 167s3a of the second stage core 150c2a may be coupled to the two guide pins 180, respectively.

The first guide holes 167h1 of the second guide slots 167s2a of the third stage core 150c3a may be coupled to the two guide pins 180, respectively.

The second guide holes 167h2 of the second guide slots 167s2a of the fourth stage core 150c4a may be coupled to the two guide pins 180, respectively.

The first guide holes 167h1 of the first guide slots 167s1a of the fifth stage core 150c5a may be coupled to the two guide pins 180, respectively.

Next, the second guide holes 167h2 of the first guide slots 167s1a of the sixth stage core 150c6a may be coupled to the two guide pins 180, respectively.

Accordingly, the permanent magnet 156 of the first stage core 150c1a through the permanent magnet 156 of the sixth stage core 150c6a may be arranged to form the skew angle θ with respect to the axial direction.

This can suppress an occurrence of cogging torque during the rotation of the rotor core 150a.

Vibration and noise generation during the rotation of the rotor core 150a can also be suppressed, thereby enabling a quiet operation of the rotor.

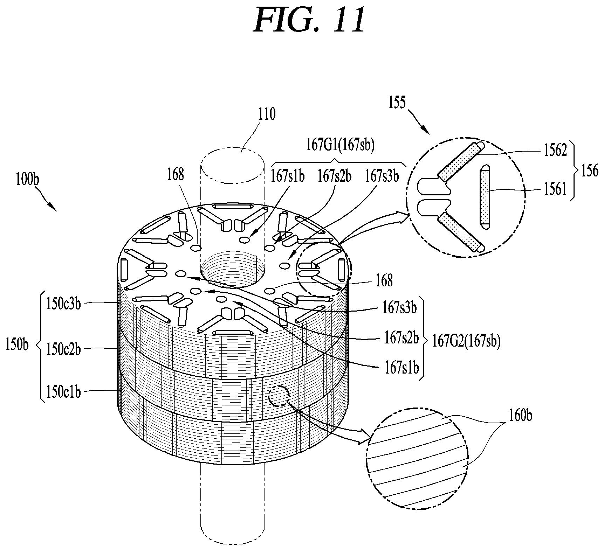

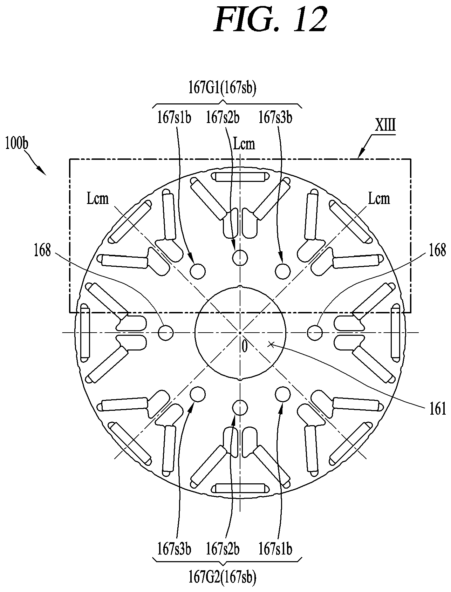

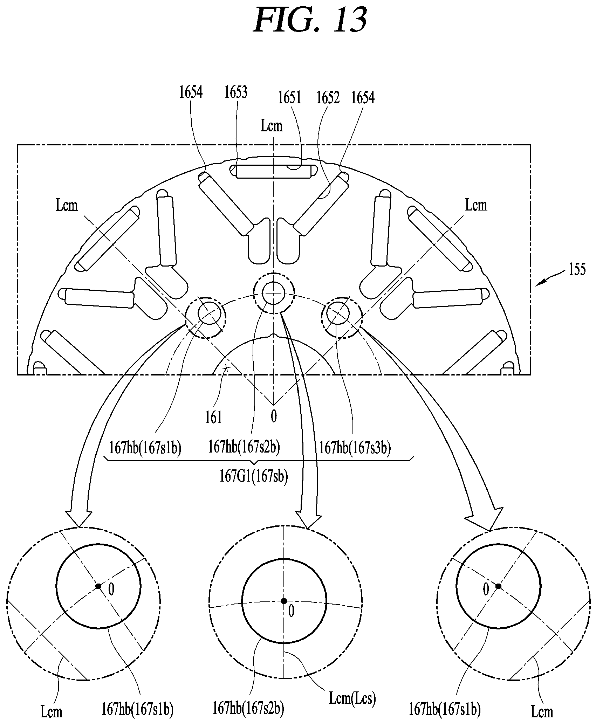

FIG. 11 is a perspective view of a rotor of a motor according to another embodiment, FIG. 12 is a planar view of a magnetic steel plate of the rotor core of FIG. 11, and FIG. 13 is an enlarged view of a main part of FIG. 12. As illustrated in FIGS. 11 to 13, a rotor 100b of a motor according to this embodiment may include a rotation shaft 100 and a rotor core 150b.

The rotation shaft 110 may be formed in a shape of a circular cylinder, for example.

The rotor core 150b may be formed, for example, in a cylindrical shape.

The rotor core 150b may include a plurality of magnetic steel plates 160b.

The rotor core 150b may include a plurality of stage cores coupled to the rotation shaft 110 along the axial direction.

The plurality of stage cores may each include a plurality of magnetic steel plates 160b.

In this embodiment, the plurality of stage cores may be configured as three stages.

The rotor core 150b may include a first stage core 150c1b, a second stage core 150c2b, and a third stage core 150c3b.

This embodiment illustrates an example in which the rotor core 150b has three stages, but this is merely illustrative, and the rotor core 150b may be configured as two stages.

The magnetic steel plate 160b of the first stage core 150c1b, the magnetic steel plate 160b of the second stage core 150c2b, and the magnetic steel plate 160b of the third stage core 150c3b have the same shape.

A rotation shaft hole 161 may be formed through the center of the rotor core 150b.

The rotor core 150b may have a plurality of magnetic poles 155 (N pole and S pole).

The plurality of magnetic poles 155 may alternately have different magnetic poles 155 (N pole and S pole) along the circumferential direction.

This embodiment illustrates that the plurality of magnetic poles 155 have eight poles. However, this is merely illustrative and the disclosure is not limited thereto.

The plurality of magnetic poles 155 may each have a permanent magnet 156.

The permanent magnet 156 may include first magnets 1561 spaced apart along the circumferential direction.

The permanent magnet 156 may include second magnets 1562 forming a pair per one magnetic pole 155.

In this embodiment, the permanent magnet 156 of each stage core may be arranged to form a preset skew angle θ with respect to the axial direction.

The skew angle θ may be set, for example, in a range of 1 to 11 degrees.

In this embodiment, the permanent magnet 156 of the first stage core 150c1b and the permanent magnet 156 of the second stage core 150c2b may be arranged to be spaced apart from each other at a preset angle along the circumferential direction, and the permanent magnet 156 of the second stage core 150c2b and the permanent magnet 156 of the third stage core 150c3b may be arranged to be spaced apart from each other at the preset angle.

As illustrated in FIG. 12, the magnetic steel plate 160b may be formed in a circular plate shape.

A rotation shaft hole 161 may be formed through the center of the magnetic steel plate 160b.

The magnetic steel plate 160b may include a plurality of permanent magnet coupling parts 165 formed therethrough to be spaced apart from one another in the circumferential direction.

Each stage core of the rotor core 150b may include the permanent magnet coupling part 165 to which the permanent magnet 156 is coupled.

In this embodiment, the permanent magnet coupling part 165 may be formed so that the permanent magnet 156 is inserted along the axial direction.

The permanent magnet coupling part 165 may include a first magnet insertion portion 1651 in which the first magnet 1561 is inserted in the axial direction.

The permanent magnet coupling part 165 may include second magnet insertion portions 1652 in which the second magnets 1562 are inserted in the axial direction.

The second magnet insertion portions 1652 may form a "V" shape in which outer ends thereof are open along the circumferential direction compared to inner ends.

In some embodiments, the rotor core 150b may include guide slots 167sb, into which the guide pins 180 are inserted to guide the permanent magnet 156 of each stage core to form a preset skew angle θ.

In this embodiment, the guide slot 167sb may include a guide hole 167h having a circular cross-section to accommodate the guide pin 180 therein.

The guide slots 167sb may be formed to penetrate along the axial direction so that the guide pins 180 are insertable along the axial direction.

The guide slots 167sb may be arranged on the inner side of the plurality of magnetic poles 155 along the radial direction.

Each of the plurality of guide slots 167sb may include a first guide slot 167s1b, a second guide slot 167s2b, and a third guide slot 167s3b spaced apart along the circumferential direction.

In this embodiment, the first guide slot 167s1b, the second guide slot 167s2b, and the third guide slot 167s3b may each include one guide hole 167h.

The first guide slot 167s1b, the second guide slot 167s2b, and the third guide slot 167s3b may be located at a preset angle with respect to the center of the radially outer magnetic pole 155.

The guide slots 167sb may include a first group 167G1 including the first guide slot 167s1b, the second guide slot 167s2b, and the third guide slot 167s3b, and a second group 167G2 that is rotationally symmetrical to the first group 167G1 with respect to the center O of the rotor core 150.

The second group 167G2 may include the first guide slot 167s1b, the second guide slot 167s2b, and the third guide slot 167s3b that are rotationally symmetrical with respect to the first guide slot 167s1b, the second guide slot 167s2b, and the third guide slot 167s3b of the first group 167G1 with respect to the center O of the rotor core 150.

The rotor core 150b may include balance slots 168 formed between the first group 167G1 and the second group 167G2.

This can suppress an occurrence of rotational unbalance due to a weight difference during the rotation of the rotor core 150b.

The balance slots 168 may be arranged, for example, at positions forming right angles respectively with the second guide slot 167s2b of the first group 167G1 and the second guide slot 167s2b of the second group 167G2.

The balance slot 168 may have the same shape as the second guide slot 167s2b, for example.

In some embodiments, the second guide slot 167s2b may be configured such that its center is arranged on the center line Lcm of the magnetic pole 155 arranged on the outside along the radial direction.

The center (the center line Lcs) of the second guide slot 167s2b may be arranged on the center line Lcm of the magnetic pole 155 on the radially outside of the second guide slot 167s2b.

The first guide slot 167s1b may be formed at a point that is shifted by a preset angle in one direction (to the left in the drawing) along the circumferential direction from the second guide slot 167s2b.

The third guide slot 167s3b may be formed at a point that is shifted by the preset angle in another direction (to the right in the drawing) along the circumferential direction from the second guide slot 167s2b.

Here, the guide hole 167h of the third guide slot 167s3b may be formed at a point shifted by the preset angle A in the one direction (to the left in the drawing) from the center line Lcm of the radially outer magnetic pole 155.

The center line Lcm of the magnetic pole 155 on the radial outside of the third guide slot 167s3b may be arranged at a point shifted by the angle A in another direction (to the right in the drawing) along the circumferential direction from the center of the third guide slot 167s3b.

The guide hole 167h of the first guide slot 167s1b may be formed at a point shifted by the preset angle A in the another direction (to the right in the drawing) from the center line Lcm of the radially outer magnetic pole 155.

The center line Lcm of the magnetic pole 155 on the radial outside of the first guide slot 167s1b may be arranged at a point shifted by the angle A in the one direction (to the left side in the drawing) along the circumferential direction from the center (center line Lcs) of the first guide slot 167s1b.

Here, the angle A may be calculated, for example, by dividing the skew angle TA of the permanent magnet 156 by a number TN-1, which is obtained by subtracting 1 from the number TN of stage cores (A=TA/(TN-1)).

With this configuration, in case of coupling the first stage core 150c1b, the second stage core 150c2b, and the third stage core 150c3b along the axial direction, the first guide slot 167s1b of the first group 167G1 and the first guide slot 167s1b of the second group 167G2 in the first stage core 150c1b may first be coupled to the two guide pins 180, respectively.

Next, the second guide slots 167s2b of the second stage core 150c2b may be coupled to the two guide pins 180, respectively.

The third guide slots 167s3b of the third stage core 150c3b may be coupled to the two guide pins 180, respectively.

Accordingly, the permanent magnet 156 of the first stage core 150c1b, the permanent magnet 156 of the second stage core 150c2b, and the permanent magnet 156 of the third stage core 150c3b may be arranged to form a skew angle θ with respect to the axial direction.

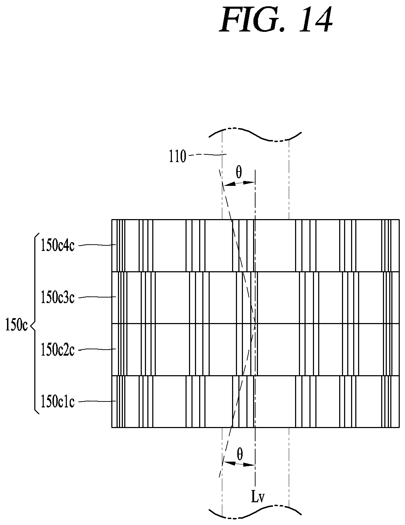

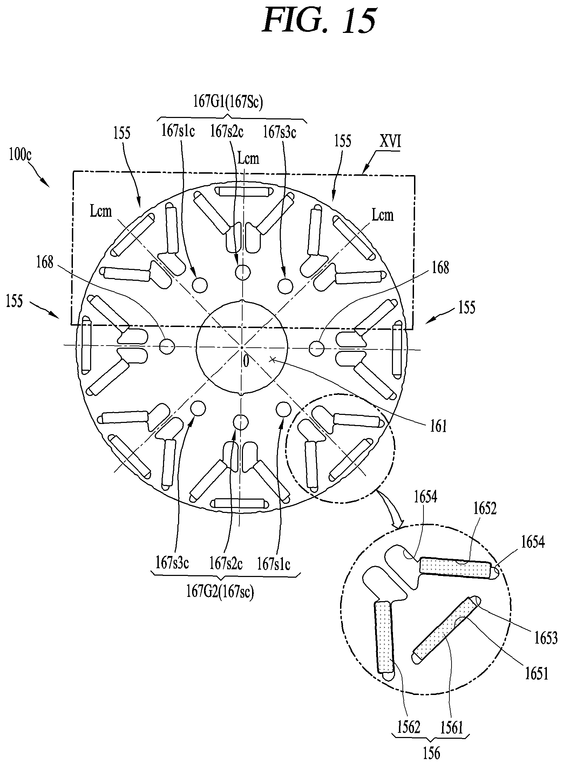

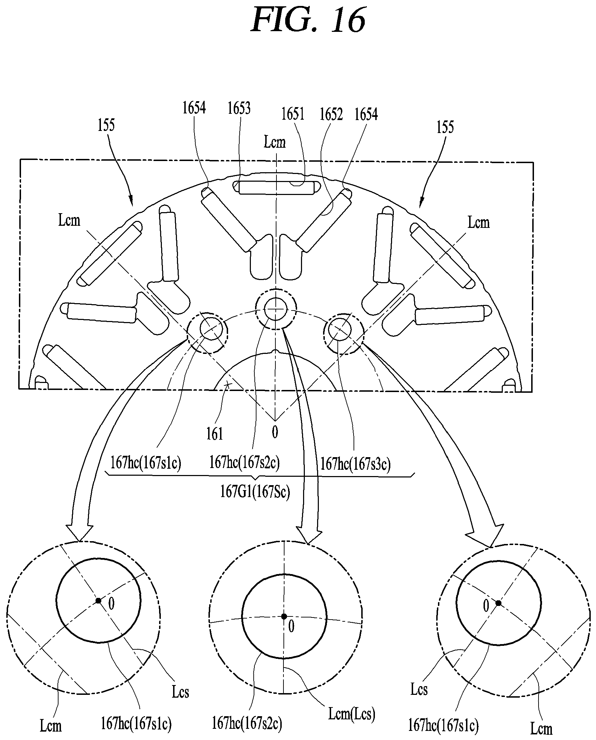

FIG. 14 is a lateral view of a rotor of a motor according to another embodiment, FIG. 15 is a planar view of a magnetic steel plate of the rotor core of FIG. 14, and FIG. 16 is an enlarged view of a main part of FIG. 15. As illustrated in FIGS. 14 to 16, a rotor 100c of a motor according to this embodiment may include a rotation shaft 100 and a rotor core 150c.

The rotation shaft 110 may be formed in a shape of a circular cylinder, for example.

The rotor core 150c may be formed, for example, in a cylindrical shape.

The rotor core 150c may include a plurality of stage cores coupled along the axial direction.

In this embodiment, the plurality of stage cores may include a first stage core 150c1 c, a second stage core 150c2c, a third stage core 150c3a, and a fourth stage core 150c4c.

The rotor core 150c may include a plurality of magnetic steel plates 160.

In this embodiment, an example is illustrated in which the rotor core 150c includes four stages (the first stage core 150c1c, the second stage core 150c2c, the third stage core 150c3c, and the fourth stage core 150c4c), but this is only an example and is not limited thereto.

The rotor core 150c may have a plurality of magnetic poles 155 (N pole and S pole) spaced apart along the circumferential direction.

The plurality of magnetic poles 155 may alternately have different magnetic poles 155 (N pole and S pole) along the circumferential direction of the rotor core 150c.

In this embodiment, the plurality of magnetic poles 155 may include eight poles.

The plurality of magnetic poles 155 may each have a permanent magnet 156.

The permanent magnet 156 may include, for example, a first magnet 1561 with opposite ends arranged close to the circumference of the rotor core 150c.

The permanent magnet 156 may include second magnets 1562 forming a pair per one magnetic pole 155.

The second magnets 1562 may be arranged to form a "V" shape, for example.

In this embodiment, the rotor core 150c may be arranged so that the permanent magnets 156 of stage cores, which are farther away from a horizontal line passing through the axial center of the plurality of stage cores, among the plurality of stage cores, are arranged to form a preset skew angle θ in the same circumferential direction.

In this embodiment, the rotor core 150c may include four stages including a first stage core 150c1c to a fourth stage core 150c4c. Therefore, the axial center of the rotor core 150c may be located in a contact area between the second stage core 150c2c and the third stage core 150c3c, and a horizontal line passing through the axial center may be arranged to pass through a contact surface between the second stage core 150c2c and the third stage core 150c3c.

The permanent magnet 156 of the first stage core 150c1c and the permanent magnet 156 of the second stage core 150c2c may be arranged to form the skew angle θ.

The permanent magnet 156 of the third stage core 150c3c and the permanent magnet 156 of the fourth stage core 150c4c may be arranged to form the skew angle θ.

Here, the permanent magnet 156 of the first stage core 150c1c may be arranged by being shifted in one direction (to the left in the drawing) along the circumferential direction from the permanent magnet 156 of the second stage core 150c2c.

The permanent magnet 156 of the fourth stage core 150c4c may be arranged by being shifted in the one direction (to the left in the drawing) along the circumferential direction from the permanent magnet 156 of the third stage core 150c3c.

In this embodiment, each magnetic steel plate 160 of the first stage core 150c1c, the second stage core 150c2c, the third stage core 150c3c, and the fourth stage core 150c4c may have the same shape.

A rotation shaft hole 161 into which the rotation shaft 110 is inserted may be formed through the center of the magnetic steel plate 160.

The magnetic steel plate 160 may include a permanent magnet coupling part 165 to which the permanent magnet 156 is coupled in the axial direction.

The permanent magnet coupling part 165 may include, for example, a first magnet insertion portion 1651 into which the first magnet 1561 is axially inserted, and second magnet insertion portions 1652 into which the second magnets 1562 are axially inserted.

The magnetic steel plate 160 may include guide slots 167sc, into which guide pins 180 are inserted to guide the permanent magnet 156 of each stage core to form the skew angle.

The guide slots 167sc may be arranged at the inner side of the magnetic pole 155 in the radial direction of the rotor core 150c.

The guide slots 167sc may be arranged at the outer side of the rotation shaft hole 161 in the radial direction of the rotor core 150c.

Each of the guide slots 167sc may include a first guide slot 167s1c, a second guide slot 167s2c, and a third guide slot 167s3c spaced apart along the circumferential direction.

In this embodiment, an example is illustrated in which each of the first guide slot 167s1c, the second guide slot 167s2c, and the third guide slot 167s3c has one guide hole. However, each of the first guide slot 167s1c, the second guide slot 167s2c, and the third guide slot 167s3c may include a first guide hole and a second guide hole, as described above with reference to FIGS. 6 to 10, or may include a first guide hole, a second guide hole, and a third guide hole, as described above with reference to FIGS. 1 to 5.

The second guide slot 167s2c may be configured such that its center is arranged on the center line Lcm of the magnetic pole 155 arranged on the outside in the radial direction.

The first guide slot 167s1c may be arranged to be shifted from the second guide slot 167s2 in one direction (to the left in the drawing) along the circumferential direction.

Here, the first guide slot 167s1c may be spaced apart by a preset angle A in another direction (to the right in the drawing) from the center line of the magnetic pole 155 arranged on the outside in the radial direction.

The third guide slot 167s3c may be arranged to be shifted from the second guide slot 167s2c in the another direction (to the right in the drawing) along the circumferential direction.

Here, the third guide slot 167s3c may be spaced apart by the preset angle A in the one direction (to the left in the drawing) from the center line of the magnetic pole 155 arranged on the outside in the radial direction.

Here, the preset angle A may be calculated by dividing a skew angle TA of the permanent magnet 156 of the first stage core 150c1c and the permanent magnet 156 of the second stage core 150c2c by a value TN-1, which is obtained by subtracting 1 from the number TN of the first stage core 150c1c and the second stage core 150c2c (A = TA/(TN-1). In case that the skew angle TA is 4 degrees, the preset angle A may be calculated as 4/(2-1) = 4 degrees.

In some embodiments, the third stage core 150c3c and the fourth stage core 150c4c may have a shape in which the upper and lower surfaces of the first stage core 150c1 c and the third stage core 150c3c are turned over.

Here, the two guide pins 180 may be coupled to the first guide slots 167s1c of the first stage core 150c1c, and the second guide slots 167s2c of the second stage core 150c2c may be coupled to the two guide pins 180.

Accordingly, the permanent magnet 156 of the first stage core 150c1c may be arranged by being shifted by the skew angle A in the one direction (to the left in the drawing) from the permanent magnet 156 of the second stage core 150c2c along the circumferential direction.

Next, the second guide slots 167s2c of the third stage core 150c3c may be coupled to the two guide pins 180, and the two guide pins 180 may be coupled to the first guide slots 167s1c of the fourth stage core 150c4c.

Accordingly, the permanent magnet 156 of the third stage core 150c3c may be arranged on the same line as the permanent magnet 156 of the second stage core 150c2c along the axial direction, and the permanent magnet 156 of the fourth stage core 150c4c may be arranged spaced apart by the skew angle A from the permanent magnet 156 of the third stage core 150c3c in the one direction (to the left in the drawing) along the circumferential direction.

In this embodiment, an example is illustrated in which each of the first guide slot 167s1c, the second guide slot 167s2, and the third guide slot 167s3 includes one guide hole, but as described above with reference to FIGS. 6 to 10, each guide slot 167sc may include the first guide hole and the second guide hole described above. In the case that each guide slot 167sc includes the first guide hole and the second guide hole, the rotor core may be implemented with 12 stages including first to sixth stage cores configured as described above, and seventh to twelfth stage cores coupled in the same order as the first to sixth stage cores and then arranged above the sixth stage core by inverting the upper and lower sides.

As described above with respect to FIGS. 1 to 5, each of the first guide slot 167s1c, the second guide slot 167s2c, and the third guide slot 167s3c may include a first guide hole, a second guide hole, and a third guide hole. In the case that each guide slot 167sc includes the first guide hole, the second guide hole, and the third guide hole, the rotor core may be implemented with 18 stages including first to ninth stage cores coupled by the aforementioned method, and tenth to eighteenth stage cores coupled in the same order as the first to ninth stage cores and then arranged above the ninth stage core by inverting the upper and lower sides.

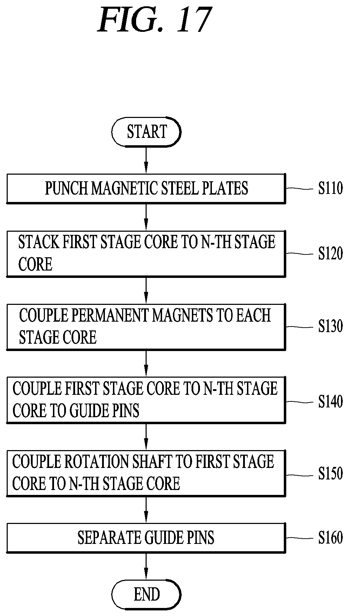

FIG. 17 is a view illustrating a method for manufacturing a rotor of a motor according to an embodiment. As illustrated in FIGS. 1 to 5 and 17, a method for manufacturing a rotor according to an embodiment of the disclosure may include punching a plurality of magnetic steel plates 160 (S110), stacking the plurality of magnetic steel plates 160 to form a first stage core 150c1 to an n-th stage core, respectively (S120), coupling permanent magnets 156 to the first stage core 150c1 to the n-th stage core (S130), coupling guide slots 167s of the first stage core 150c1 to guide slots 167s of the n-th stage core to guide pins 180 (S140), and coupling a rotation shaft 110 to the first stage core 150c1 to the n-th stage core (S150).

The method for manufacturing a rotor of a motor according to the embodiment may further include, after coupling the rotation shaft 110 to the first stage core 150c1 to the n-th stage core (S150), separating the guide pins 180 from the first stage core 150c1 to the n-th stage core (S160).

As illustrated in FIGS. 1 to 5, a rotor 100 of a motor according to an embodiment may include a rotation shaft 100 and a rotor core 150.

The rotor core 150 may include a first stage core 150c1 to a ninth stage core 150c9.

The rotor core 150 may include a plurality of magnetic poles 155 formed alternately along a circumferential direction.

The plurality of magnetic poles 155 may each include, for example, a first magnet 1561 and second magnets 1562 forming a pair per one pole.

The first stage core 150c1 to the ninth stage core 150c9 may each include the first magnet 1561 and the second magnets.

The first stage core 150c1 to the ninth core 150c9 may each include a plurality of magnetic steel plates 160 of the same shape.

The permanent magnet 156 of the first stage core 150c1 through the permanent magnet 156 of the ninth stage core 150c9 may be arranged to form a preset skew angle θ with respect to the axial direction.

The plurality of magnetic steel plates 160 may include a rotation shaft hole 161 into which the rotation shaft 110 is inserted, a permanent magnet coupling part 165 into which the permanent magnet 156 is coupled, and guide slots 167s into which guide pins 180 are inserted to guide the permanent magnet 156 of each stage core to form a skew angle θ.

The guide slots 167s may be arranged at the inner side of the magnetic pole 155 in the radial direction of the rotor core 150.

Each of the guide slots 167s may include a first guide slot 167s1, a second guide slot 167s2, and a third guide slot 167s3 spaced apart along the circumferential direction.

The guide slots 167s may include a first group 167G1 including the first guide slot 167s1, the second guide slot 167s2, and the third guide slot 167s3, and a second group 167G2 including the first guide slot 167s1, the second guide slot 167s2, and the third guide slot 167s3 that are formed rotationally symmetrical to the first group 167G1 with respect to the center of the rotor core 150.

Each of the first guide slot 167s1, the second guide slot 167s2, and the third guide slot 167s3 may include a first guide hole, a second guide hole, and a third guide hole, into which the guide pin 180 is insertable.

The first guide hole, the second guide hole, and the third guide hole may be formed to overlap each other in one region along the circumferential direction.

The center of the first guide hole and the center of the second guide hole may be spaced apart from each other, and the center of the second guide hole and the center of the third guide hole may be spaced apart from each other, each by a preset angle A.

In this embodiment, an example is illustrated in which each of the first guide slot 167s1, the second guide slot 167s2, and the third guide slot 167s3 includes the first guide hole, the second guide hole, and the third guide hole, but as described above with reference to FIGS. 6 to 10, each of the first guide slot 167s1, the second guide slot 167s2, and the third guide slot 167s3 may include the first guide hole and the second guide hole. As described above with respect to FIGS. 11 to 16, each of the first guide slot 167s1, the second guide slot 167s2, and the third guide slot 167s3 may include one guide hole.

After punching the plurality of magnetic steel plates 160, the plurality of magnetic steel plates 160 may be stacked to form each of the first stage core 150c1 to the n-th stage core (the ninth stage core 150c9).

The permanent magnet 156 may be coupled to each permanent magnet coupling part 165 of the first stage core 150c1 to the n-th stage core (the ninth stage core 150c9).

In some embodiments, in case that the first stage core 150c1 to the n-th stage core are to be stacked (coupled) along the axial direction, the guide pins 180 may be used. The number of guide pins 180 may be two and the two guide pins 180 may be positioned opposite to each other at 180 degrees.

The first stage core 150c1 to the n-th stage core may be arranged so that the permanent magnets 156 form the skew angle θ by using the first guide hole to the third guide hole of each of the first guide slot 167s1 to the third guide slot 167s3.

In case that the axial coupling of the first stage core 150c1 to the n-th stage core (the ninth stage core 150c9) is completed, the rotation shaft 110 may be coupled into the rotation shaft hole 161.

Here, the rotation shaft 110 may be press-fitted to the rotation shaft hole 161 of the first stage core 150c1 to the n-th stage core (the ninth stage core 150c9).

When the rotation shaft 110 is coupled to the first stage core 150c1 to the n-th stage core (the ninth stage core 150c9), the two guide pins 180 may be separated from the first stage core 150c1 to the n-th stage core (the ninth stage core 150c9).

The foregoing description has been given of specific embodiments of the disclosure. However, the disclosure may be embodied in various forms without departing from the spirit or essential characteristics thereof, and thus the above-described embodiments should not be limited by the content of the detailed description.

Even embodiments not listed in the detailed description should be interpreted within the scope of the technical idea defined in the appended claims. All changes and modifications included within the technical range of the claims and their equivalents should be embraced by the appended claims.

## Claims

1. A rotor of a motor, the rotor comprising:
a rotation shaft;
a rotor core comprising a first stage core to an n-th stage core each having a plurality of magnetic steel plates stacked, and coupled to the rotation shaft in an axial direction; and
permanent magnets coupled to the first stage core to the n-th stage core, respectively, to form a plurality of magnetic poles,
wherein the plurality of magnetic steel plates each comprise a rotation shaft hole to which the rotation shaft is coupled, permanent magnet coupling parts to which the permanent magnets are coupled, and guide slots into which a guide pin is inserted to guide the permanent magnets arranged in the first stage core to the n-th stage core to form a preset skew angle, the guide slots are arranged on a radial inside of the plurality of magnetic poles,
each of the guide slots comprises a first guide slot, a second guide slot, and a third guide slot spaced apart along a circumferential direction, and
the first guide slot, the second guide slot, and the third guide slot are arranged at positions forming a preset angle with respect to a center of a magnetic pole located on a radial outside thereof.

2. The rotor of claim 1, wherein the guide slot comprises a first group comprising the first guide slot, the second guide slot, and the third guide slot, and a second group formed rotationally symmetrical to the first group with respect to a center of the rotor core.

3. The rotor of claim 2, wherein each of the first guide slot, the second guide slot, and the third guide slot comprises a first guide hole and a second guide hole.

4. The rotor of claim 3, wherein the guide pin is inserted, when the n-th stage core is configured as a second stage core, into each of the first guide hole of the second guide slot of the first stage core and the second guide hole of the second guide slot of the second stage core.

5. The rotor of claim 3, wherein the guide pin is coupled, when the n-th stage core is configured as a fourth stage core, to each of the second guide hole of the third guide slot of the first stage core, the first guide hole of the second guide slot of the second stage core, the second guide hole of the second guide slot of the third stage core, and the first guide hole of the first guide slot of the fourth stage core.

6. The rotor of claim 3, wherein the guide pin is coupled, when the n-th stage core is configured as a sixth stage core, to each of the first guide hole of the third guide slot of the first stage core, the second guide hole of the third guide slot of the second stage core, the first guide hole of the second guide slot of the third stage core, the second guide hole of the second guide slot of the fourth stage core, the first guide hole of the first guide slot of the fifth stage core, and the second guide hole of the first guide slot of the sixth stage core.

7. The rotor of claim 2, wherein each of the first guide slot, the second guide slot, and the third guide slot comprises a first guide hole, a second guide hole, and a third guide hole.

8. The rotor of claim 7, wherein the guide pin is inserted, when the n-th stage core is configured as a third stage core, into each of the first guide hole of the second guide slot of the first stage core, the second guide hole of the second guide slot of the second stage core, and the third guide hole of the second guide slot of the third stage core.

9. The rotor of claim 7, wherein the guide pin is inserted, when the n-th stage core is configured as a fifth stage core, into each of the third guide hole of the third guide slot of the first stage core, the first guide hole of the second guide slot of the second stage core, the second guide hole of the second guide slot of the third stage core, the third guide hole of the second guide slot of the fourth stage core, and the first guide hole of the first guide slot of the fifth stage core.

10. The rotor of claim 7, wherein the guide pin is inserted, when the n-th stage core is configured as a seventh stage core, into each of the second guide hole of the third guide slot of the first stage core, the third guide hole of the third guide slot of the second stage core, the first guide hole of the second guide slot of the third stage core, the second guide hole of the second guide slot of the fourth stage core, the third guide hole of the second guide slot of the fifth stage core, the first guide hole of the first guide slot of the sixth stage core, and the second guide hole of the first guide slot of the seventh stage core.

11. The rotor of claim 7, wherein the guide pin is inserted, when the n-th stage core is configured as a ninth stage core, into each of the first guide hole of the third guide slot of the first stage core, the second guide hole of the third guide slot of the second stage core, the third guide hole of the third guide slot of the third stage core, the first guide hole of the second guide slot of the fourth stage core, the second guide hole of the second guide slot of the fifth stage core, the third guide hole of the second guide slot of the sixth stage core, the first guide hole of the first guide slot of the seventh stage core, the second guide hole of the first guide slot of the eighth stage core, and the third guide hole of the first guide slot of the ninth stage core.

12. The rotor of claim 3, wherein an internal angle A between the guide holes is an angle obtained by dividing a skew angle TA by a number TN-1, obtained by subtracting 1 from a number TN of the n-th stage core.

13. The rotor of claim 3, wherein the first guide slot and the third guide slot are formed symmetrically with respect to a center line passing through a center of the second guide slot along the radial direction.

14. The rotor of claim 3, wherein the permanent magnets of the first stage core to the n-th stage core are arranged such that permanent magnets of stage cores farther away from a horizontal line, passing through axial centers of the first stage core to the n-th stage core, are spaced apart to form a preset skew angle in a same circumferential direction.

15. The rotor of claim 2, wherein the rotor core further comprises balance slots formed between the first group and the second group.

16. The rotor of claim 15, wherein the balance slots are arranged to form right angles with the second guide slot of the first group and the second guide slot of the second group, respectively.

17. The rotor of claim 2, wherein the second guide slot is arranged such that a center thereof is located on a center line of a magnetic pole on a radial outside thereof,
the first guide slot is arranged such that a center thereof is located at a point spaced apart from the center line of the magnetic pole on the radial outside by a preset angle in one direction along the circumferential direction, and
the second guide slot is arranged such that a center thereof is located at a point spaced apart from the center line of the magnetic pole on the radial outside by the preset angle in another direction along the circumferential direction.

18. The rotor of any of claims 1 to 17, wherein the permanent magnet comprises a first magnet arranged in the circumferential direction of the rotor core or a pair of second magnets arranged spaced apart from each other along the circumferential direction of the rotor core and forming a preset internal angle.

19. The rotor of claim 18, wherein the permanent magnet comprises the first magnet and the pair of second magnets, and the first magnet is arranged between the pair of second magnets along the circumferential direction.

20. A method for manufacturing a rotor of a motor, the rotor comprising a rotation shaft, a rotor core comprising a first stage core to an n-th stage core each having a plurality of stacked magnetic steel plates, and coupled to the rotation shaft, and permanent magnets coupled to the first stage core to the n-th stage core, respectively, to form a plurality of magnetic poles, the method comprising:
punching the plurality of magnetic steel plates so that the plurality of magnetic steel plates each comprise a rotation shaft hole to which the rotation shaft is coupled, permanent magnet coupling parts to which the permanent magnets are coupled, and guide slots into which a guide pin is inserted to guide the permanent magnets arranged in the first stage core to the n-th stage core to form a preset skew angle, wherein the guide slots are arranged on a radial inside of the plurality of magnetic poles, each of the guide slots comprises a first guide slot, a second guide slot, and a third guide slot spaced apart along a circumferential direction, and the first guide slot, the second guide slot, and the third guide slot are arranged at positions forming a preset angle with respect to a center of a magnetic pole on a radial outside;
forming each of the first stage core to the n-th stage core by stacking the plurality of magnetic steel plates;
coupling the permanent magnets to the first stage core to the n-th stage core, respectively;
coupling a guide slot of the first stage core through a guide slot of the n-th stage core to the guide pin along the axial direction so that the permanent magnets arranged in the first stage core to the n-th stage core are rotated by a preset angle in one direction or another direction along the circumferential direction, to form the skew angle; and
coupling the rotation shaft to the rotation shaft hole of each of the first stage core to the n-th stage core.
